Europäisches Patentamt

European Patent Office

Office européen des brevets

(19)

(11) Publication number: **0 255 736**
A1

(12) # EUROPEAN PATENT APPLICATION

(21) Application number: **87200856.0**

(22) Date of filing: **28.09.83**

(51) Int. Cl.⁴: **B 23 P 23/02**, B 23 Q 3/157

(30) Priority: **28.09.82 US 426188**

(43) Date of publication of application: **10.02.88**
**Bulletin 88/6**

(84) Designated Contracting States: **AT BE CH DE FR GB IT LI LU NL SE**

(60) Publication number of the earlier application in accordance with Art. 76 EPC: **0106595**

(71) Applicant: **Yang, Tai-Her, 5-1 Taipin Street, Si-Hu Town Dzan-Hwa (TW)**

(72) Inventor: **Yang, Tai-Her, 5-1 Taipin Street, Si-Hu Town Dzan-Hwa (TW)**

(74) Representative: **Arthur, Bryan Edward et al, Withers & Rogers 4 Dyer's Buildings Holborn, London EC1N 2JT (GB)**

(54) **Automatic tool exchange apparatus.**

(57) An automatic tool exchange apparatus for use in a multi-function machine tool system, comprising at least one first tool carrier (A; 48-4) having means for carrying a plurality of tools (K₀ - K₅; 48-8), at least one second tool carrier (B; 48-6), and means for moving said first carrier so as to cooperate with said second carrier for supply and/or removal of a tool.

EP 0 255 736 A1

ACTORUM AG

## An Automatic Tool Exchange Apparatus

This invention relates to an automatic tool exchange apparatus for multi-function machine tooling.

Simplicity, standardization, and specifications are the basic pre-requisites in mass productions of industrial products; however, the main mechanical processing machine in the automatic processing system has to be individually designed so as to meet the requirements of different working pieces and different processing courses; therefore, its standardization and specifications are rather difficult to meet. Further, in cases where the working piece or the processing course has major changes, its flexibility is also less adaptable, especially, for the processing system of a large working piece. In order to eliminate the aforesaid drawbacks, the inventor has developed a dragon-gate type machine tool, with a completely innovative idea in terms of design, so as to make said machine tool multi-functional, such as lathe cutting, drilling, planning, milling, abrading, and boring; moreover, this invention may be arranged in a "Group" type structure for series and flow-chart sequence processing, or for combined or paralled-type processing simultaneously. By means of the newly developed tool-automatic exchange method, the tool chest, the circulating working table and other interface means which for are collectively controlled by a small computer, a tunnel-type mechanical processing system is established. In the said processing system, the elements to be included in the "Group" type structure may be selected dependent upon the processing course and the requirements of the working piece.

Since the mechanical hardware and the elements in the said "Group" type structure are all assembly and dis-assembly elements, a person who knows little about the inner mechanical structure in the production flow-chart system can still pick up or select the elements to assemble a given "Group" structure. Owing to the assembly and disassembly features of the elements in the said system, it may be manufactured by mass production methods under a given standard and specifications. In addition, any change in the processing power and sequeure may be accomplished by changing the software instructions, or by a minor change in the hardware portion, so as to change the mechanical processing system from a specialized nature to a general nature for the purpose of breaking thru the difficulty of the inability to conduct economical mass production because a working piece is os a small quantity but has multiple models.

## Detailed Description:

Generally, the dragon-gate type machine tools may be classified according to their functions as follows:

(1) Planing machine and milling machine.

(2) Drilling machine.

(3) Grinding machine.

(4) Vertical lathe.

(5) Copying lathe.

In accordance with the structure, they may be classified as follows:

(1) One-sided vertical column type.

(2) Two-sided vertical column type.

(3) Multi-sided vertical column type.

In accordance with the method of driving during processing, they may be classified as follows:

(1) Dragon-gate motion type.

(2) Working table reciptocating motion type.

(3) Working table rotary motion type.

(4) A combination working table reciprocating and rotary motion type.

(5) A type in which the working piece to be processed is placed on the ground.

In accordance with the lathe mandrel, they may be classi-

fied as folows:

(1) Single mandrel type.

(2) Multi-mandrel type.

There are other types which can perform several functions in the mechanical processing system; in assembly and exchange natures, and their function versatility is also limited by their structure; for instance, the vertical lathe cannot be used for planing or milling processing, and the dragon-gate type milling lathe cannot perform the cutting processing. Moreover, the exchangeability between structures is rather low; therefore, in the conventional dragon-gate mechanical processing system, the adjustment flexibility of the processing course and the ability to meet the requirements of various processing working pieces is very limited. The structures of their invention which are specifically designed to liminate the aforesaid drawbacks and are described in detail as follows.

Brief Description of the Drawings:

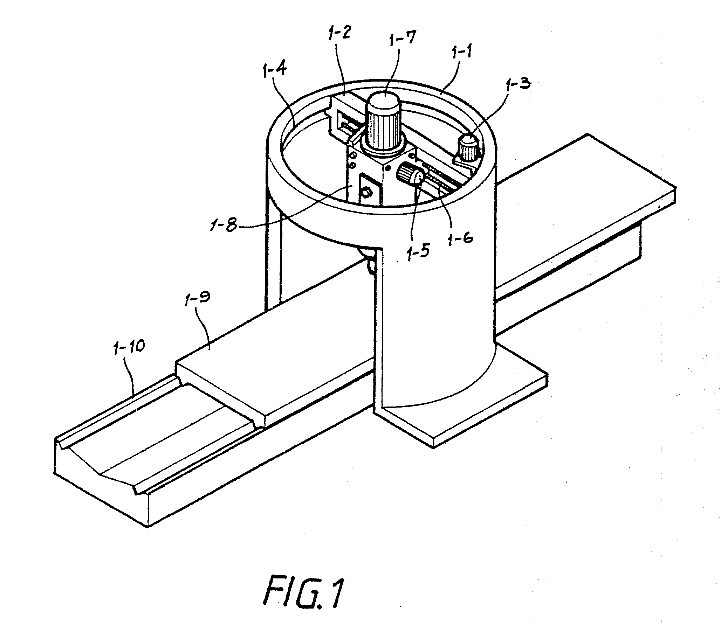

Fig. 1 shows the structure view of a set of rotatively driving displacement lateral girder on the top of the dragon gate, in which are shown.

1-1 The ring shaped top of the dragon gate structure.

1-2 A rotary driven lateral girder.

1-3 Lateral girder driving motor.

1-4 Ring-shaped guide channel.

1-5 Laterally driving motor for tool post.

1-6 Laterally driving guide screw for tool post.

1-7 Mandrel driving motor.

1-8 Tool post.

1-9 Working table.

1-10 Lathe bed.


Fig. 2 shows a view of partial circle sliding surface.

2-1 A dragon gate structure having partial annular sliding surface.

2-2 Bevel gear.

2-3 Driving motor.

2-4 The prime driving gear.


Fig. 3 shows the lathe cutting function.

3-1 Ring-shaped top of the dragon gate structure.

3-2 Rotary driven lateral girder.

3-3 Tool post.

3-4 Working table.


Fig. 4 shows the planing and milling functions.

4-1 Ring-shaped top of the dragon gate structure.

4-2 Rotary driven lateral girder.

4-3 Tool post.

4-4 Working table.

Fig. 5 shows a view of multi-ring lateral girders and working tables.

5-1 Ring-shaped top of the dragon gate structure.

5-2 Rotary driven lateral girder.

5-3 Tool post.

5-4 Working table.

5-5 Working table.

5-6 Conveying belt.

Fig. shows a symmetrical and synchronous balance tool post structure.

6-1 Ring-shaped top of the dragon gate structure.

6-2 Tool post.

6-3 Laterally driving guide screw for tool post.

6-4 Rotary driven lateral girder.

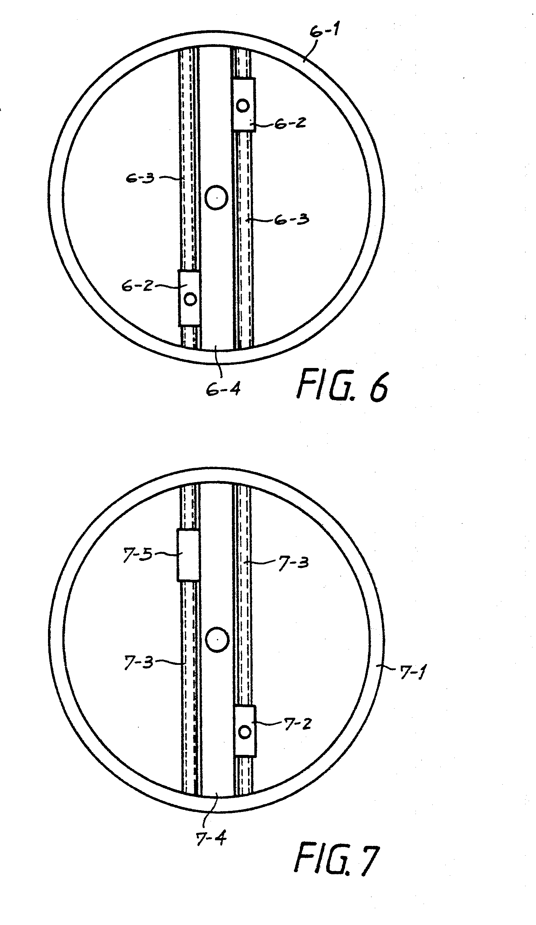

Fig. 7 shows a symmetrical and synchronous balance block structure.

7-1   Ring-shaped top of the dragon gate structure.

7-2   Tool post.

7-3   The laterally driving guide screw of tool post or balance block.

7-4   Rotary driven lateral girder.

7-5   Balance block.


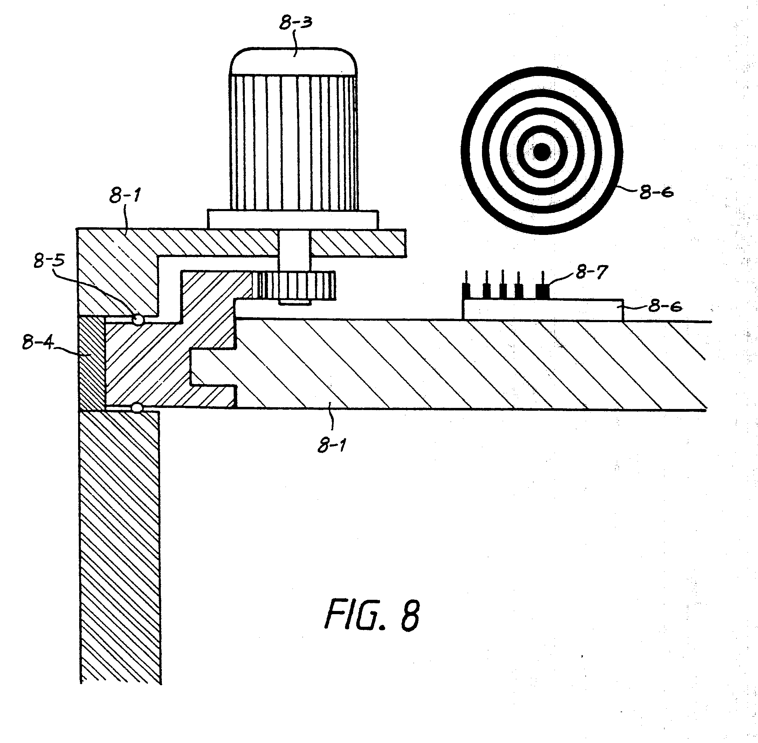

Fig. 8 shows a rotary lateral girder driven with motor and power conveying.

8-1   The fixed seat of driving motor.

8-2   Rotary driven lateral girder.

8-3   Rotary driving motor.

8-4   External fixing ring structure.

8-5   Bearing.

8-6   Conductive disk.

8-7   Conductive brush.


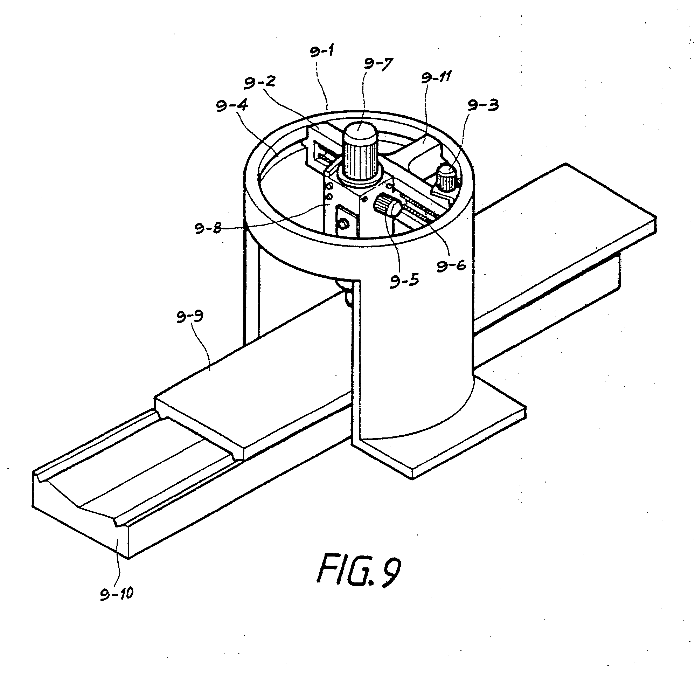

Fig. 9 shows the rotary lateral girder being provided with a supporting arm.

9-1   The ring-shaped top of the dragon gate structure.

9-2   Rotary driven lateral girder.

9-3   Driving motor of rotary girder.

9-4   Ring-shaped guide channel.

9-5  The laterally driving motor for tool post.

9-6  The laterally driving guide screw for tool post.

9-7  Mandrel driving motor.

9-8  Tool post.

9-9  Working table.

9-10 Lathe bed.

9-11 Auxiliary arm.


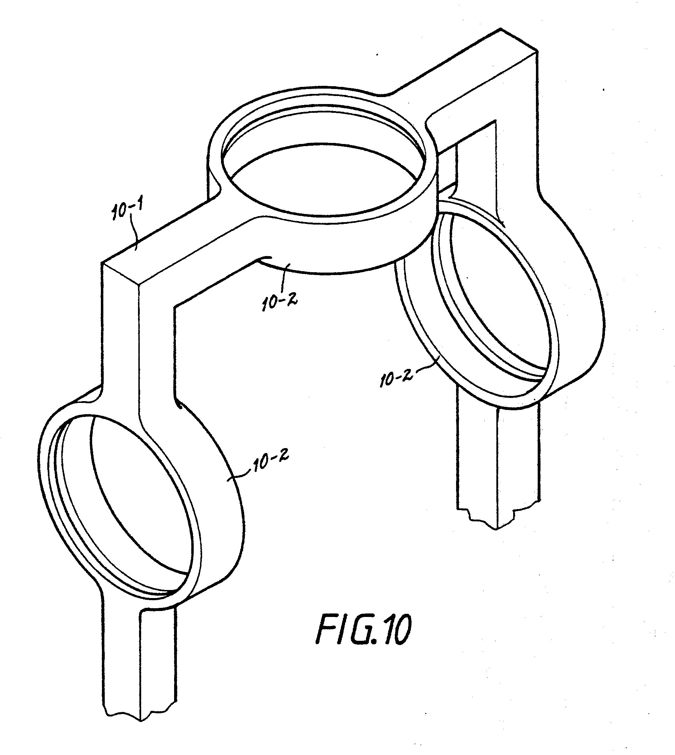

Fig. 10 shows the positions at two sides and on the top for installing rotary lateral girder.

10-1 The top of the dragon gate.

10-2 A ring-shaped structure for coupling the rotary driven lateral girder.


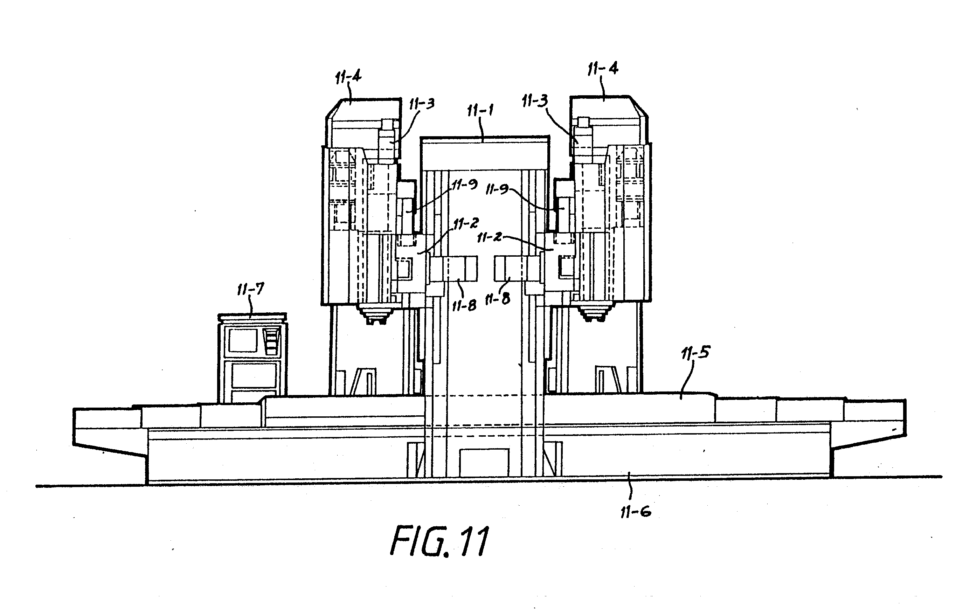

Fig. 11 shows a dragon gate structure provided with lateral girders and tool post at both sides.

11-1 The top of the dragon gate.

11-2 Lateral girder.

11-3 Mandrel driving motor.

11-4 Spindle tool post.

11-5 Working table.

11-6 Lathe bed.

11-7 Power control box.

11-8 Driving motor for lateral girder moving up & down.

11-9 Lateral driving motor for mandrel tool post.

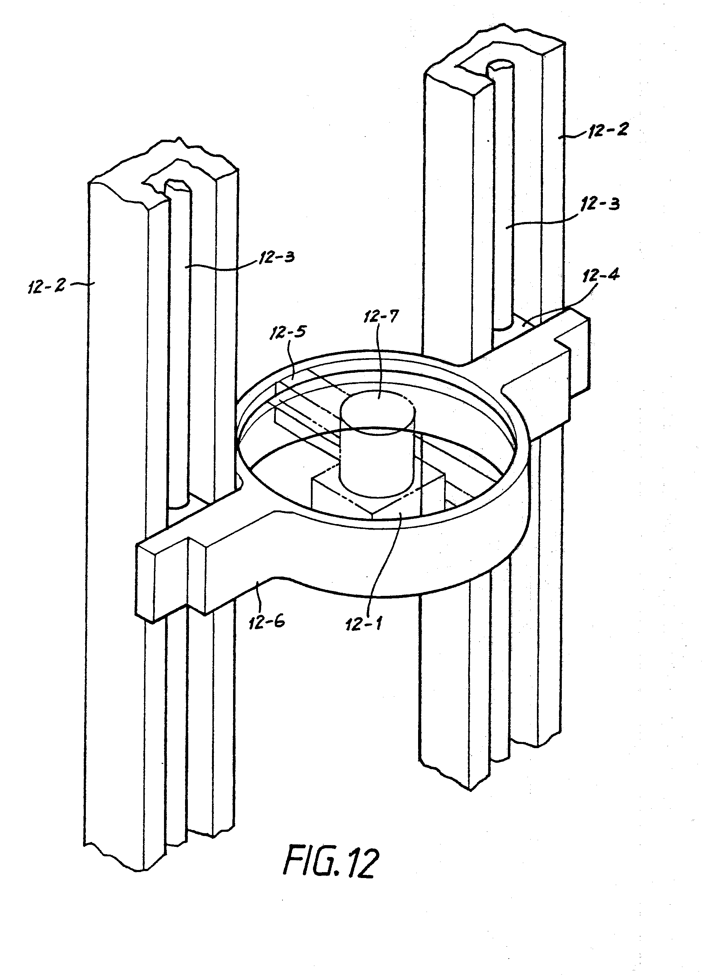

Fig. 12 shows a rotary driven lateral girder in the main lateral girder.

12-1 Tool post.

12-2 The column of the dragon gate.

12-3 The driving guide screw for the ring-shaped lateral girder moving up and down.

12-4 Joint block.

12-5 The rotary driven lateral girder.

12-6 Ring-shaped lateral girder.

12-7 Mandrel Driving Motor

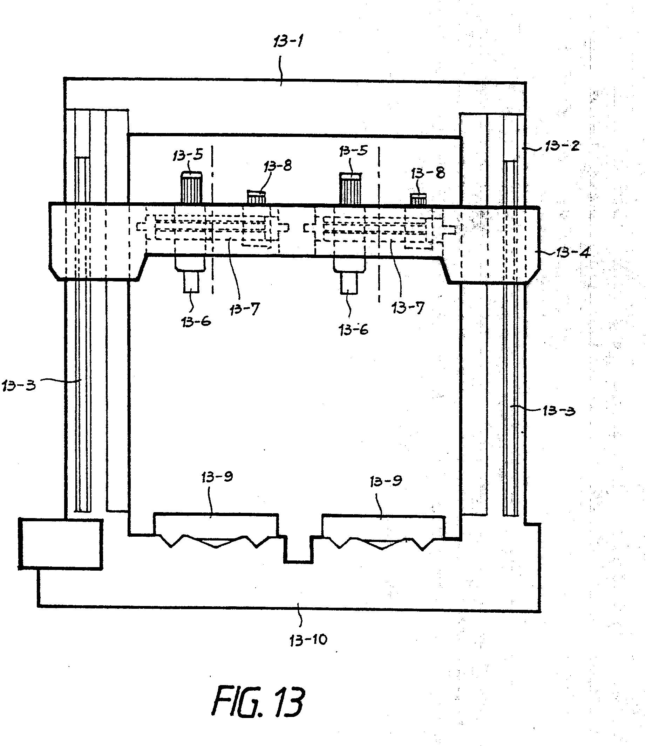

Fig. 13 shows a rotary driven lateral girder in the main lateral girder.

13-1 Top of the dragon gate

13-2 The column of the dragon gate.

13-3 The driving guide screw for the ring-shaped lateral girder moving up and down.

13-4 Ring-shaped lateral girder.

13-5 Mandrel driving motor.

13-6 Tool post.

13-7 The rotary driven lateral girder.

13-8 The driving motor of the rotary lateral.

13-9 Wroking table.

13-10 Lathe table.

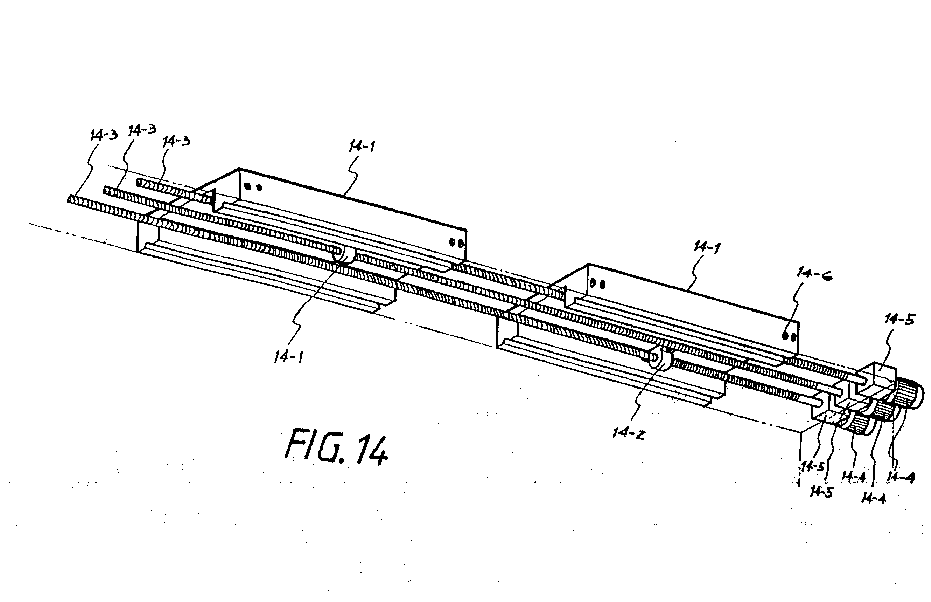

Fig. 14 shows a multi-section working table being driven with a guide screw.

14-1 Working table.

14-2 The driving nut of the working table.

14-3 Driving guide screw of working table.

14-4 Driving motor.

14-5 Transmission case.

14-6 The fixing hole in interlocked driving operation.

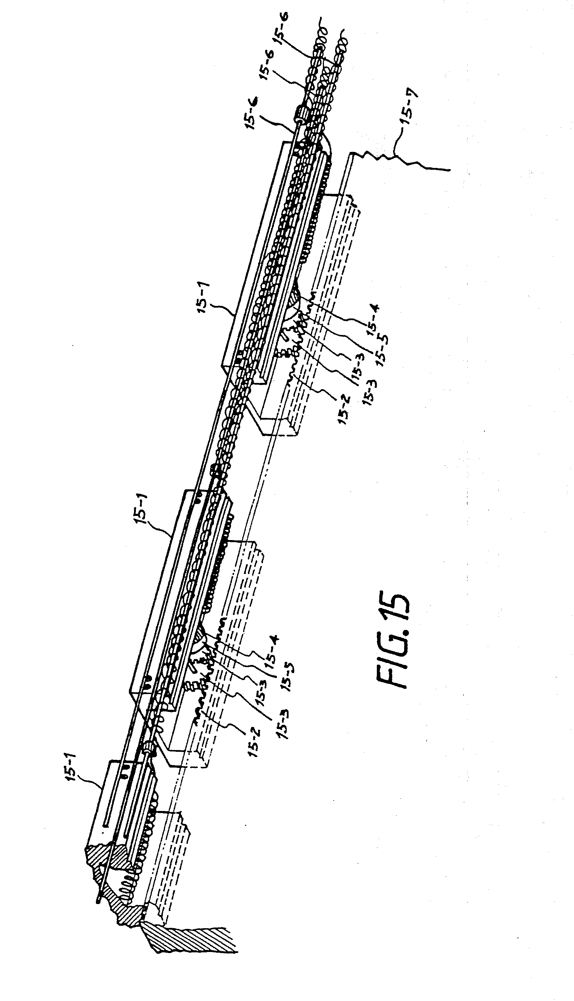

Fig. 15 shows a multi-section working table being driven with a motor installed at the working table base.

15-1 Working table.

15-2 The rack gear being fixed on the lathe table.

15-3 Transmission gear.

15-4 The driving motor installed inside the working table.

15-5 Transmission case.

15-6 Movable lead.

15-7 Lathe bed.

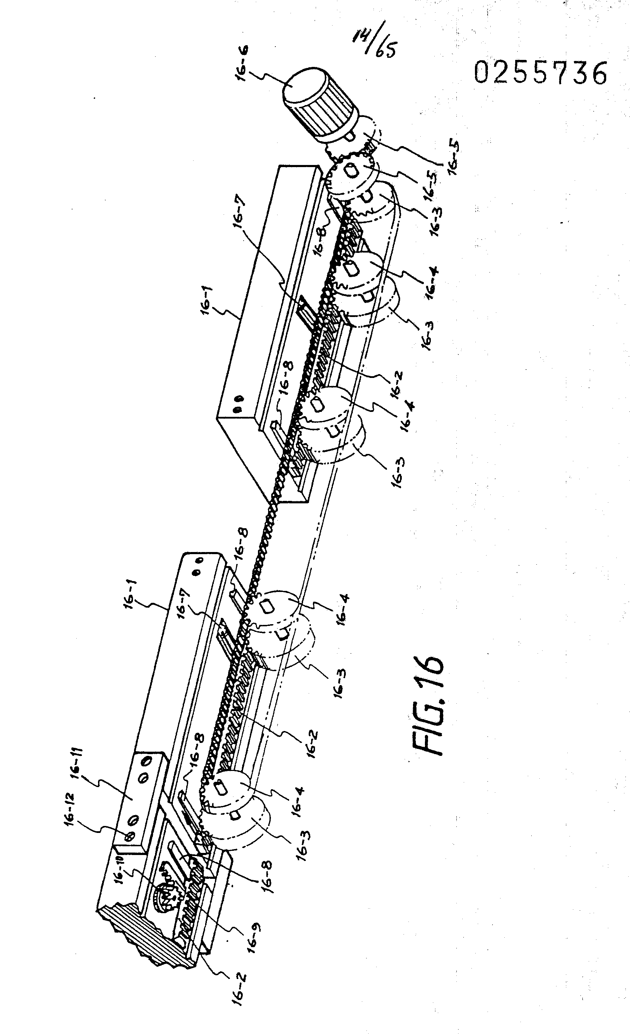

Fig. 16 shows a multi-section working table being driven by a row-arranged gears and a lateral displacement clutch gear rack.

16-1  Working table.

16-2  Working table driving gear rack.

16-3  Wroking table driving gear.

16-4  The sprockets being driven with one motor.

16-5  Transmission gear.

16-6  Driving motor.

16-7  The working table driving gear rack being driven for lateral displacement by a hydraulic or pneumatic means

16-8  The lateral sliding channel of the working table driving gear rack.

16-9  The lateral displacement auxiliary gear rack of the working table driving gear rack.

16-10 The lateral displacement auxiliary gear of the working table driving gear.

16-11 The interlocking means of working table.

16-12 The fixing hole of the interlocking means of working table.

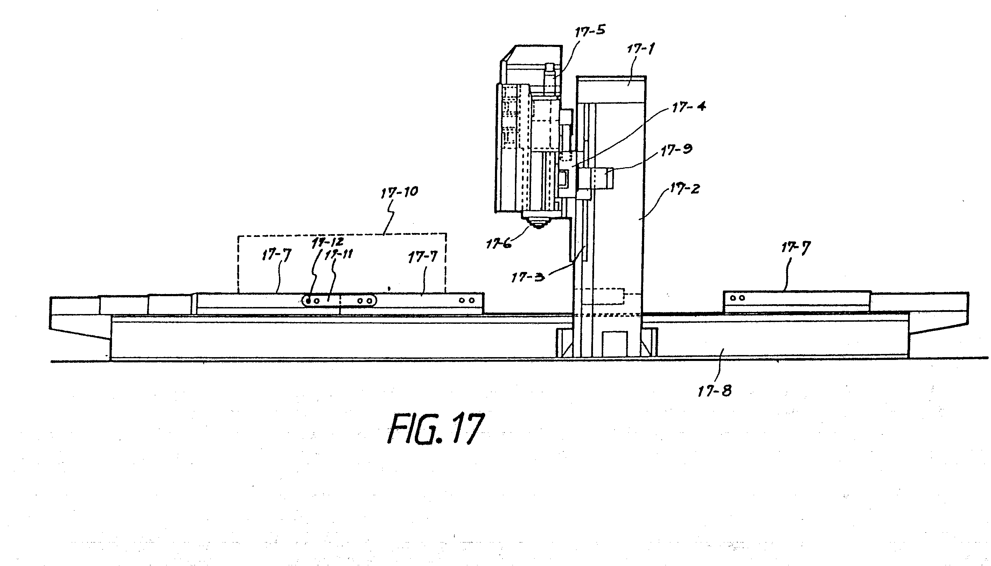

Fig. 17 shows a multi-section working table being trailed in series by means of interlocking means.

0255736

- 12 -

17-1  Top of the dragon gate.

17-2  Column of the dragon gate.

17-3  The guide screw for lateral girder moving up and down.

17-4  Lateral girder.

17-5  Mandrel driving motor.

17-6  Tool mandrel.

17-7  Working table.

17-8  Lathe bed.

17-9  The lateral displacement driving motor of the mandrel tool post.

17-10 Working piece.

17-11 The interlocking means of working table.

17-12 The locking nut of the interlocking means of working table.

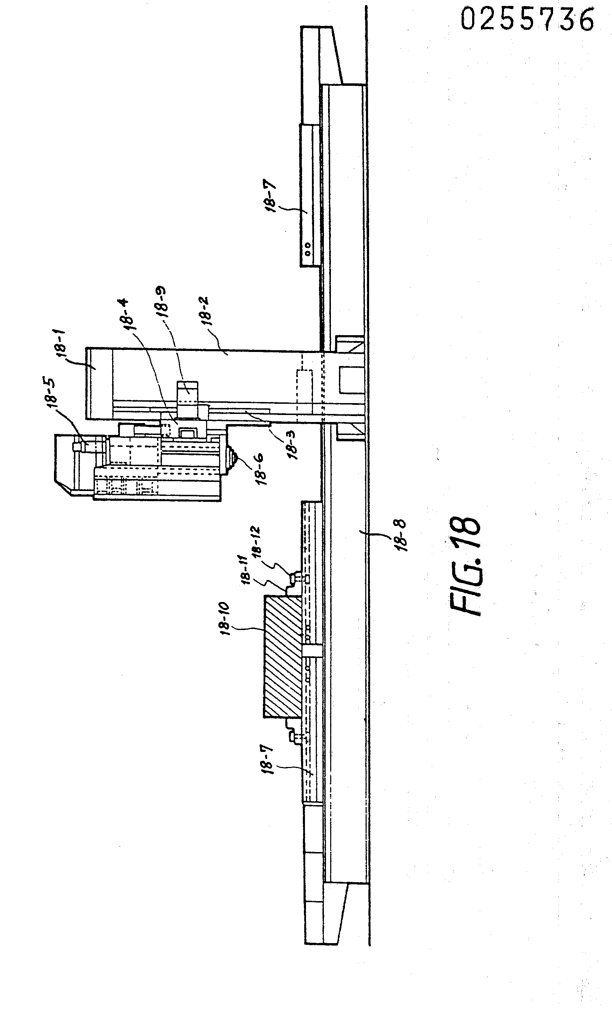

Fig. 18 shows a multi-section working table being trailed in series by means of working piece.

18-1  Top of the dragon gate.

18-2  Column of the dragon gate.

18-3  The guide screw for lateral girder moving up and down.

18-4  Lateral girder.

18-5   Mandrel driving motor.

18-6   Tool mandrel.

18-7   Working table.

18-8   Lathe bed.

18-9   The lateral displacement driving motor of the mandrel tool post.

18-10 Working piece.

18-11 Working piece locking means.

18-12 The locking nut assembly of the working piece locking means.

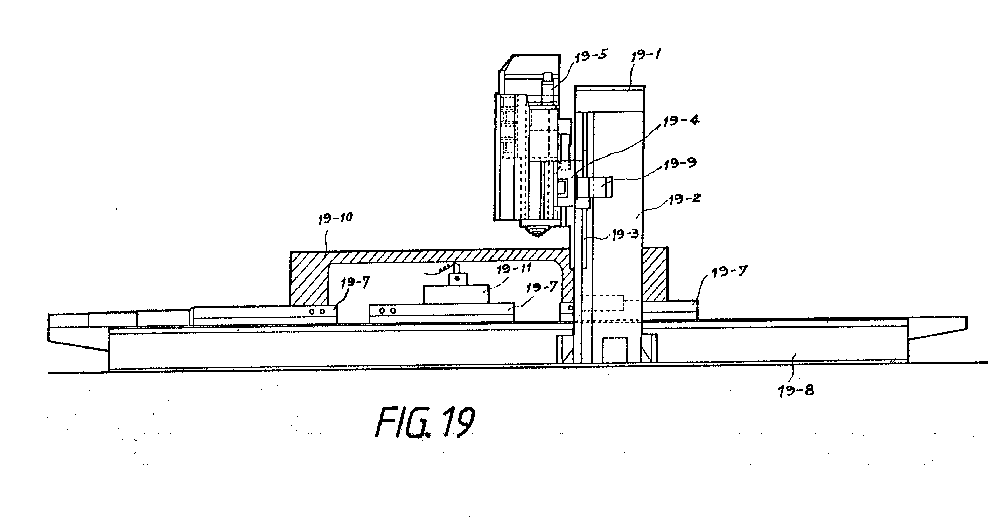

Fig. 19 shows a multi-section working pieces arranged in series with gravity point support method to trial the working tables and the processing made be done at the base.

19-1   Top of the dragon gate.

19-2   Column of the dragon gate.

19-3   The guide screw for lateral girder moving up and down.

19-4   Lateral girder.

19-5   Mandrel driving motor.

19-6   Tool mandrel.

19-7   Lathe bed.

19-9   The lateral displacement driving motor of the mandrel tool post.

0255736

- 14 -

19-10 Tool post to be installed on the lathe table.


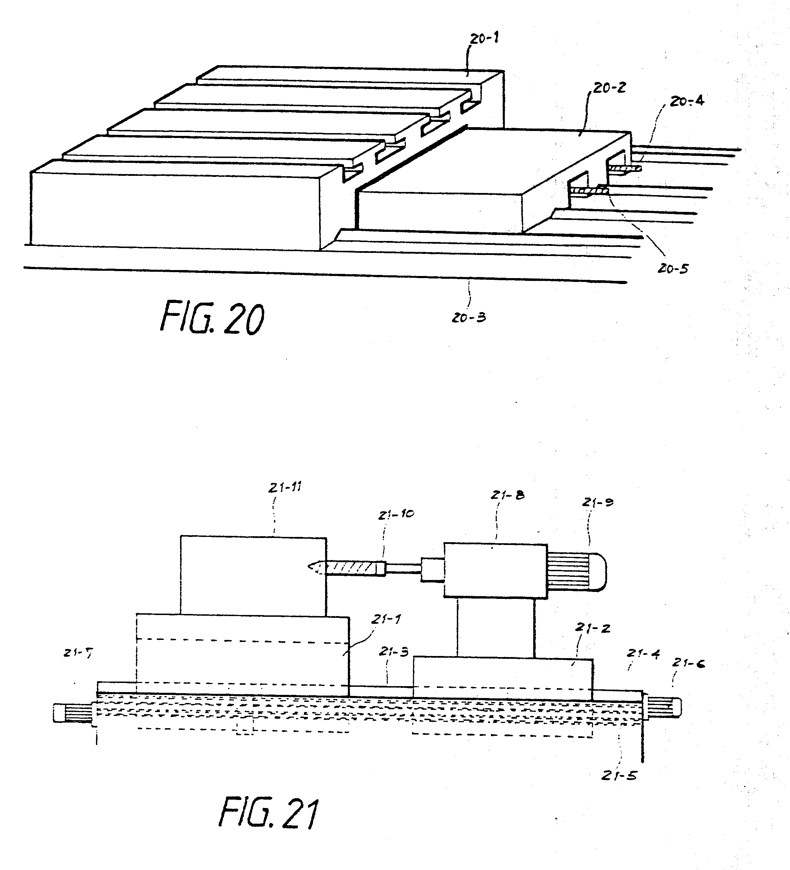

Fig. 20 shows the linear type of shrapnel (or nest) working table.

20-1  The main working table.

20-2  Small working table.

20-3  Lathe bed.

20-4  The driving guide screw of small working table.

20-5  The driving guide screw of main working table.


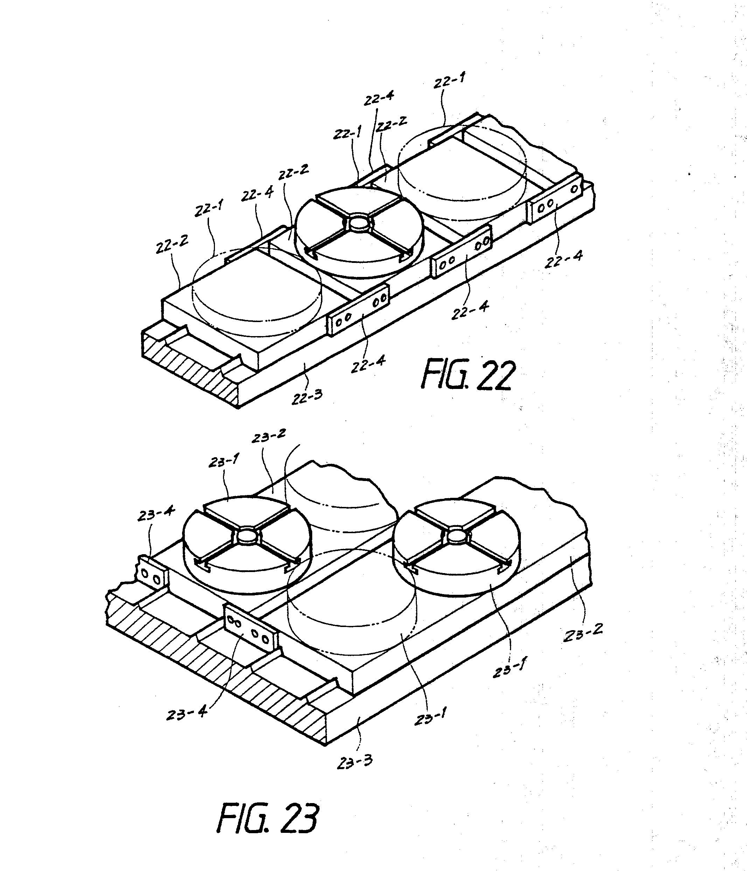

Fig. 21 shows the processing view of a linear type of shrapnel (or nest) working table.

21-1  Main working table.

21-2  Small working table.

21-3  Lathe bed.

21-4  The driving guide screw of small working table.

21-5  The driving guide screw of main working table.

21-6  The driving motor of small working table.

21-7  The driving motor of main working table.

21-8  Tool post.

21-9  Tool driving motor.

21-10 Tool.

21-11 Working piece.

Fig. 22 shows the base of rotary working table set able to be interlocked and to be put on one lathe bed for driving together.

22-1   Rotary working table.

22-2   The base of rotary working table.

22-3   Lathe bed.

22-4   Base locking means.


Fig. 23 shows the bases of the julti-column rotary working table set able to be interlocked and to be put on one lathe bed for driving together.

23-1   Rotary working table.

23-2   The base of rotary working table.

23-3   Lathe bed.

23-4   Base locking means.


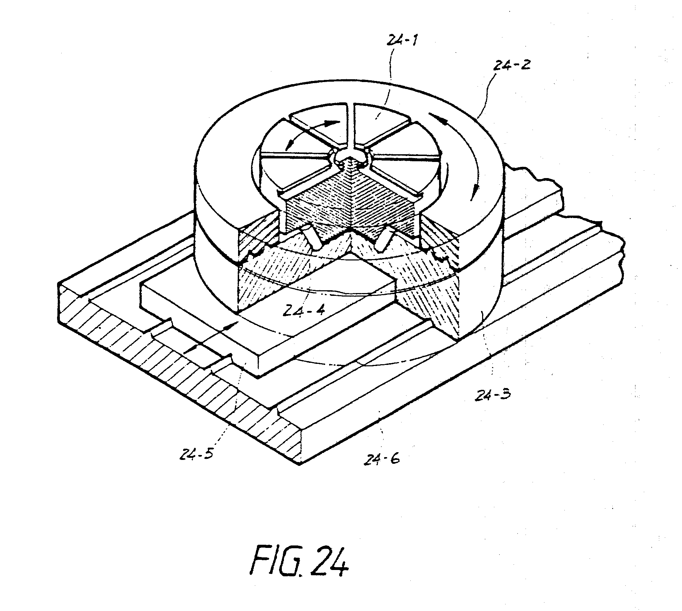

Fig. 24 shows a co-axial ring-shaped working table.

24-1   Small rotary working table.

24-2   The co-axial outer ring structure.

24-3   The base of small rotary working table and the co-axial outer ring structure.

24-4   Roller.

24-5   Main working table.

0255736

- 16 -

24-6  Lathe bed.

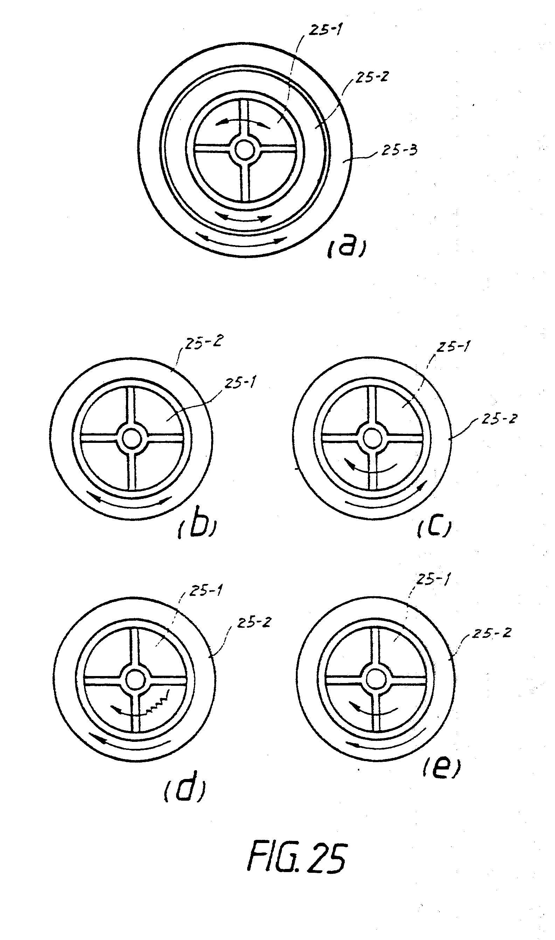

Fig. 25 shows the working table of the co-axial ring-shaped structure being driven in synchrounous, asynchrous, and in forward or reverse direction.

25-1  Small rotary working table.

25-2  The co-axial outer ring structure.

25-3  The base of small rotary working table and the co-axial outer ring structure.

25-4  Roller.

25-5  Main working table.

25-6  Lathe bed.

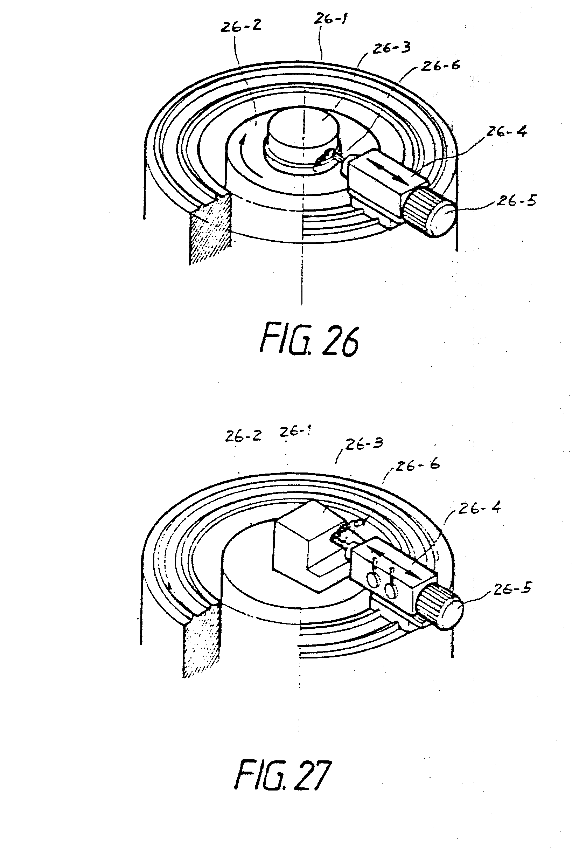

Fig. 26, 27 show two adjacent working table being processed each other for a working piece by means of the co-axial ring-shaped structure

26-1  Co-axial outer ring structure.

26-2  Rotary working table.

26-3  Working piece.

26-4  Tool post.

26-5  Tool driving motor.

26-6  Tool.

0255736

- 17 -

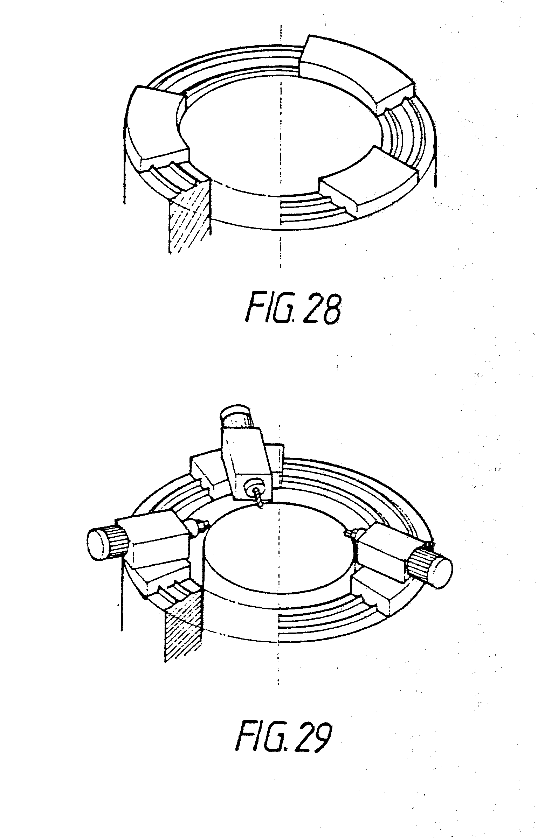

Fig. 28 shows a working table set being set up with a partial circle structure.

Fig. 29 shows a hybrid operaticn among the co-axial ring-shaped, the partial circle structure, and co-axial rotary working tables.

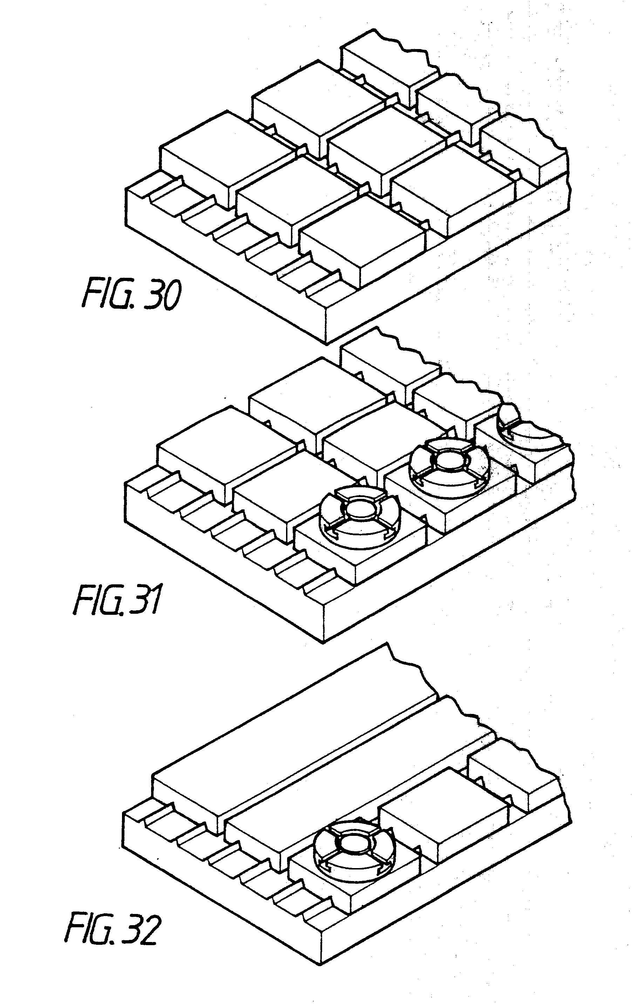

Fig. 30 shows a multi-column and multi-section working table set system.

Fig. 31 shows the embodiment-A of a hybrid operation of the multi-column and multi-section workint table sets and the ring-shaped or rotary working tables.

Fig. 32 shows the embodiment-B of a hybrid operation of the multi-column and multi-section working table sets and the ring-shaped or rotary working tables.

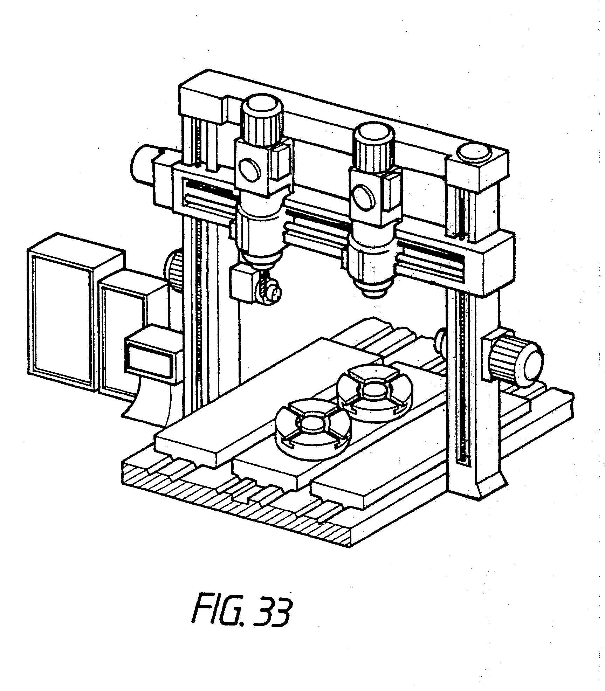

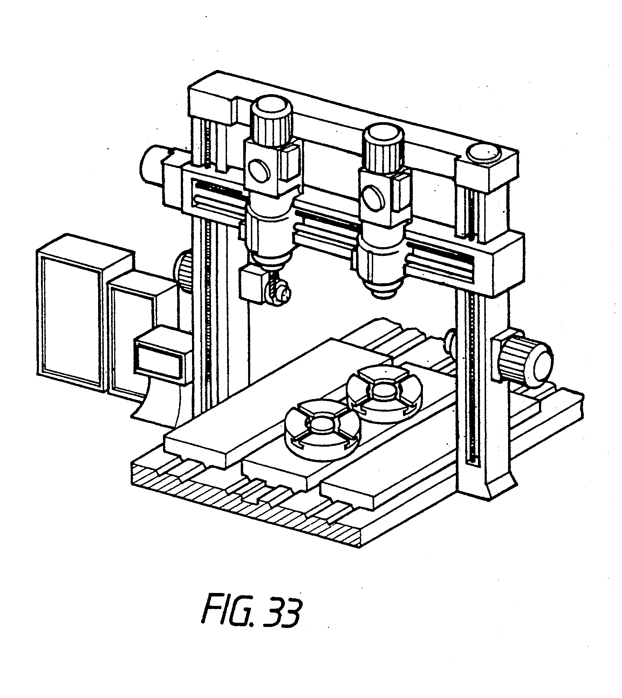

Fig. 33 shows the embodiment-C of a hybrid operation of the multi-column and multi-section working table sets and the ring-shaped or rotary working tables.

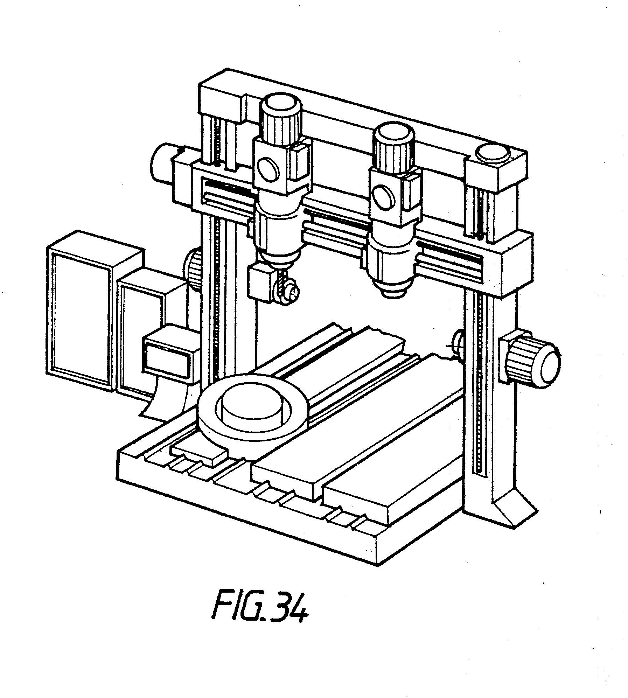

Fig. 34 shows the embodiment-D of a hybrid operation of the multi-column and multi-section working table sets and the ring-shaped or rotary working tables.

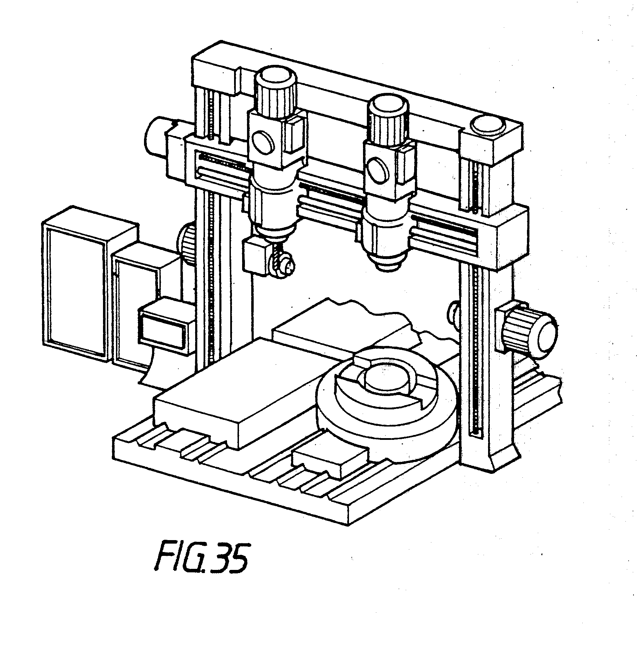

Fig. 35 shows the embodiment-E of a hybrid operation of the multi-column and multi-section working table sets and the ring-shaped or rotary working tables.

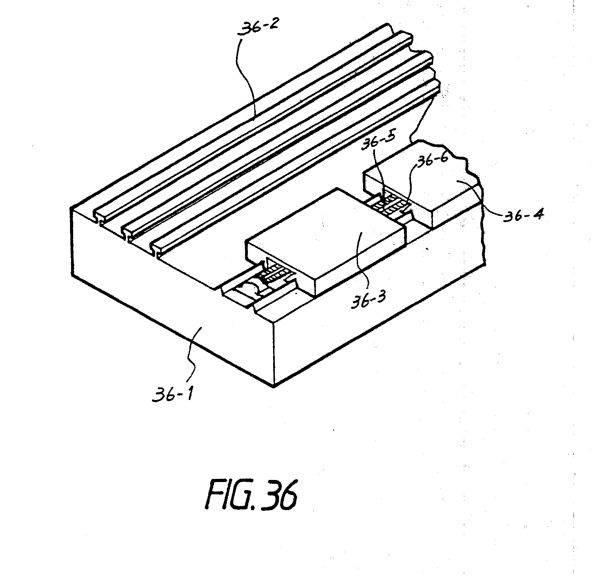

Fig. 36 shows the hybrid operation of the driving working

0255736

- 18 -

tables and the fixed working tables.

36-1  Lathe bed.

36-2  Fixed type of working table.

36-3  The driving working table.

36-4  The driving working table.

36-5  The driving guide screw of working table.

36-6  The driving guide screw of working table.

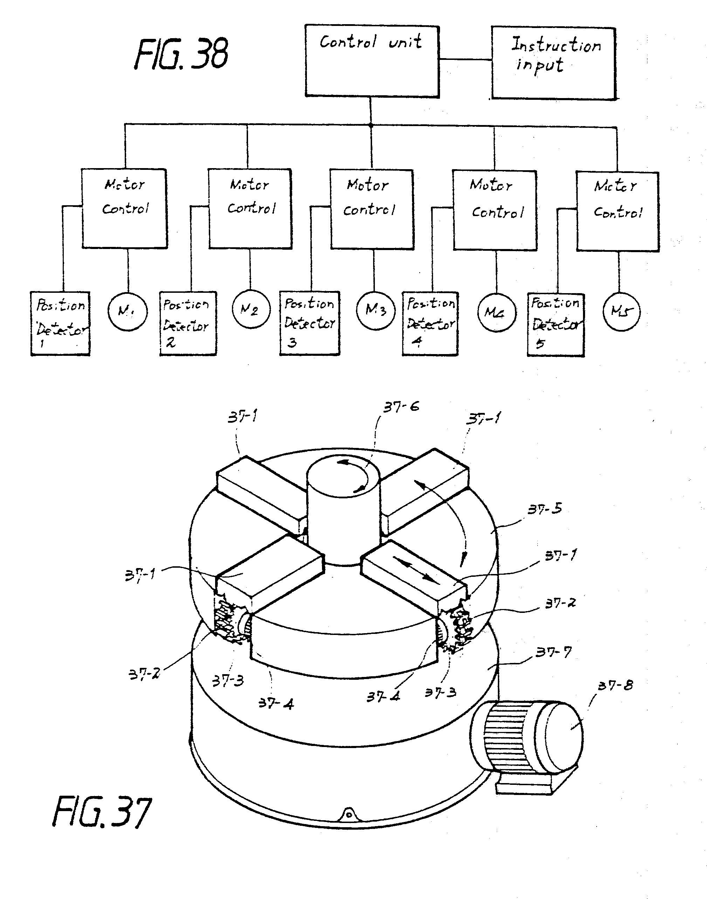

Fig. 37 shows the structure of working table exchanging station.

37-1  Working table.

37-2  Conveyer belt.

37-3  Driving wheel.

37-4  Driving motor.

37-5  Rotary table.

37-6  Center rod.

37-7  The base of rotary table.

37-8  The driving motor of rotary table.

Fig. 38 shows a control system diagram of Fig. 37.

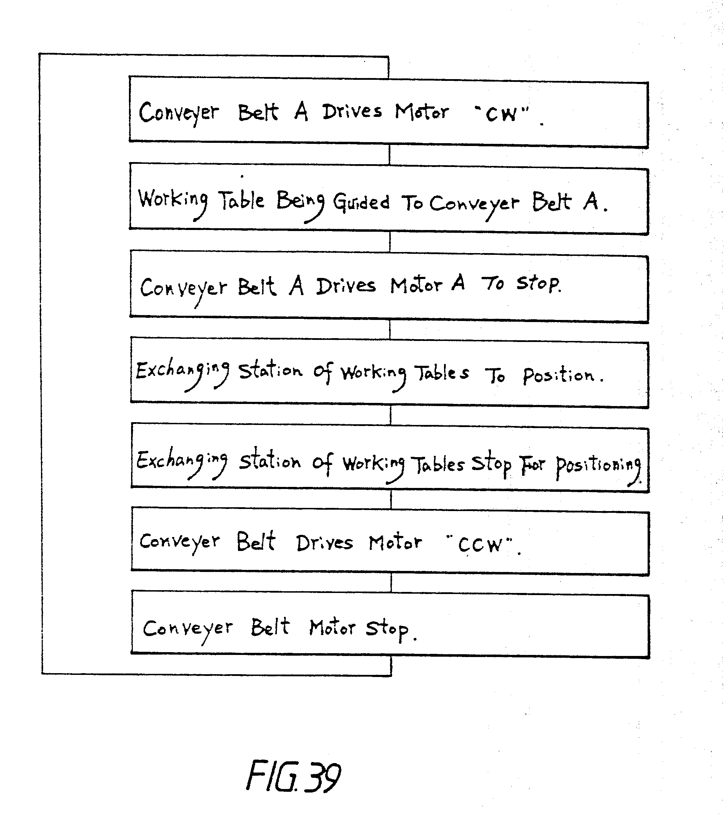

Fig. 39 shows the flow chart of the exchanging station of working table.

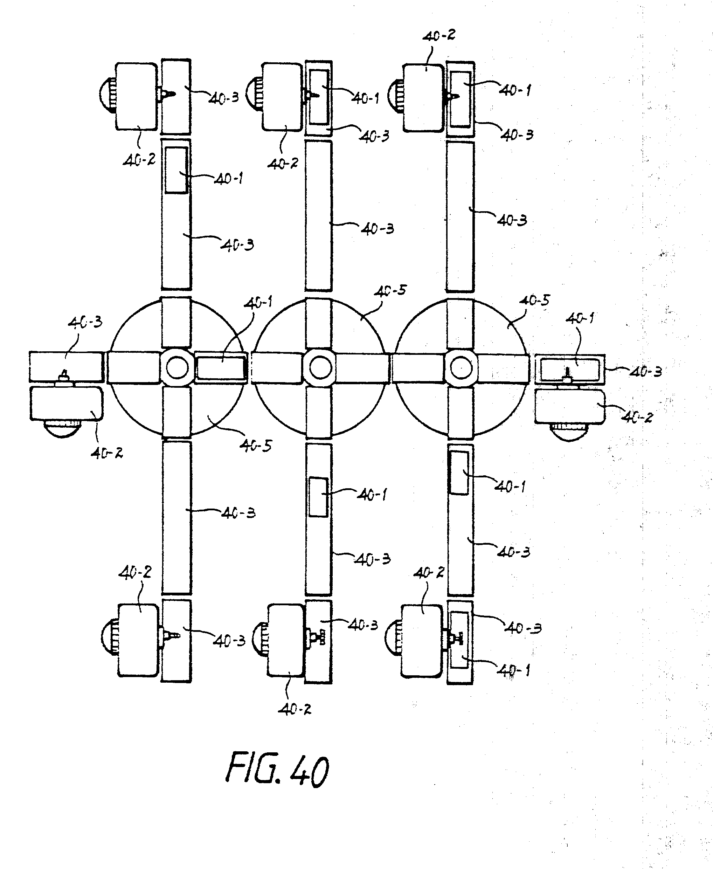

Fig. 40 shows the matrix type of embodiment of the multi-set working table exchanging station.

40-1  Working table.

40-2  The lathe bed type of processing machine body and the tool mandrel.

40-3  The lathe bed of the lathe bed type of processing machine.

40-4  The conveyer belt of working table.

40-5  The exchanging station of working table.


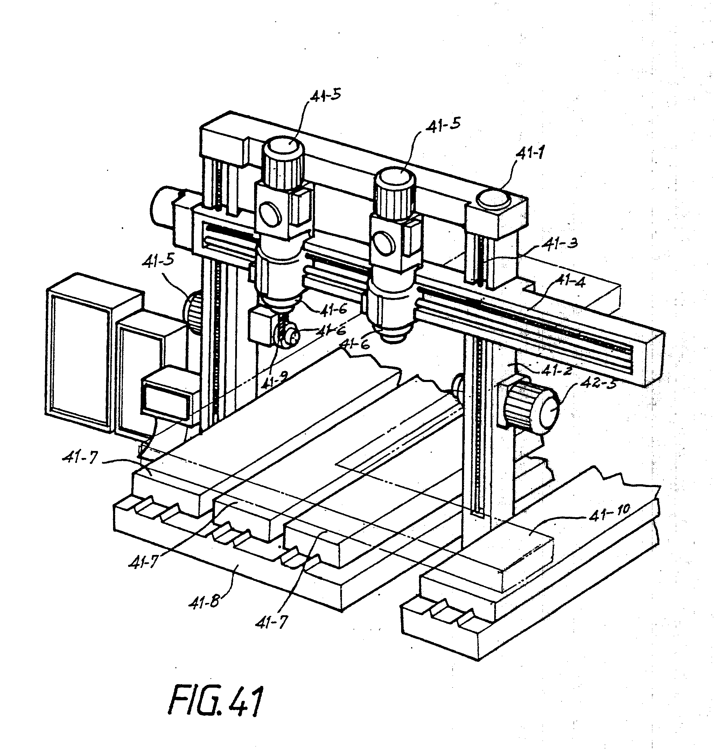

Fig. 41 shows part of the working table set being installed outside the dragon gate.

41-1  Top of the dragon gate.

41-2  The dragon gate column.

41-3  The guide screw for the lateral girder moving up and down.

41-4  Lateral girder.

41-5  Mandrel driving motor.

41-6  Tool mandrel.

41-7  Working table.

41-8  Lathe bed.

41-9  Tool.

41-10 Working piece.

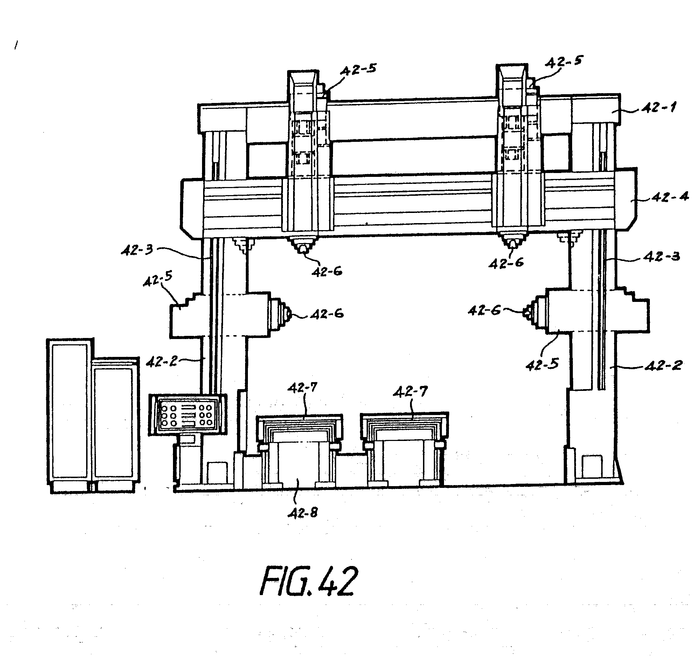

Fig. 42 shows the dragon gate type of machine reserving some ground space.

42-1  Top of the dragon gate.

42-2  The dragon gate column.

42-3  The driving guide screw for the lateral girder moving up and down.

42-4  Lateral girder.

42-5  The driving motor of mandrel.

42-6  Tool mandrel.

42-7  Working table.

42-8  Lathe bed.


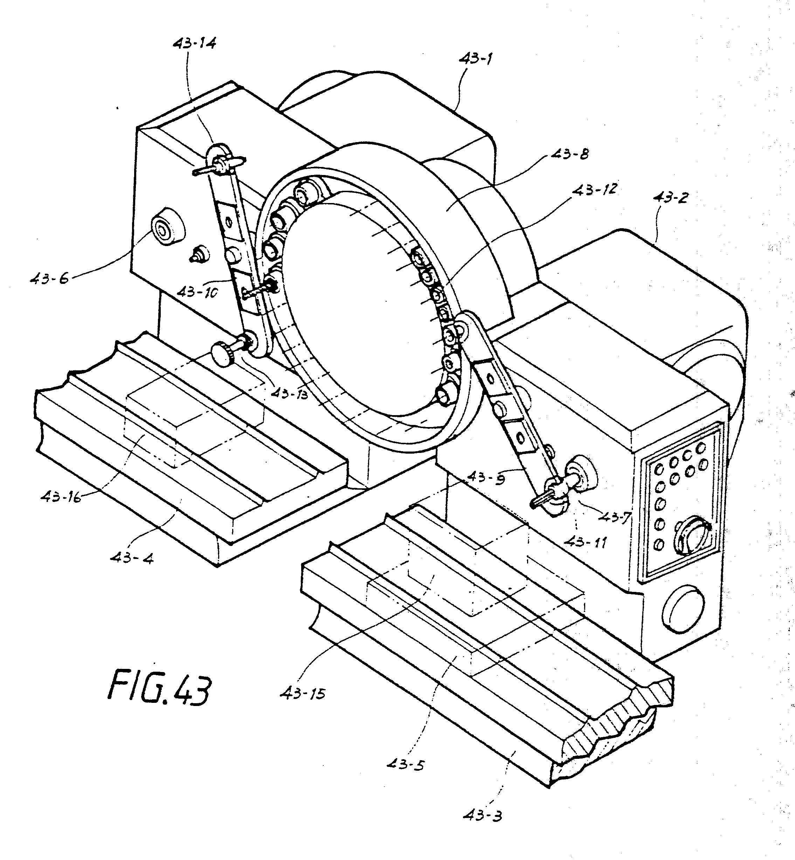

Fig. 43 shows the common tool chest for two or more tool exchanging and output positions.

43-1  Machine body.

43-2  Machine body.

43-3  Base.

43-4  Lathe bed.

43-5  Working table.

43-6  Tool mandrel.

43-7  Tool mandrel.

43-8  Tool post.

43-9  Exchanging arm.

43-10 Exchanging arm.

43-11 Standardized tool.

43-12 Stand-by tool post.

43-13 Standardized tool.

43-14 Standardized tool.

43-15 Working piece.

43-16 Working table.


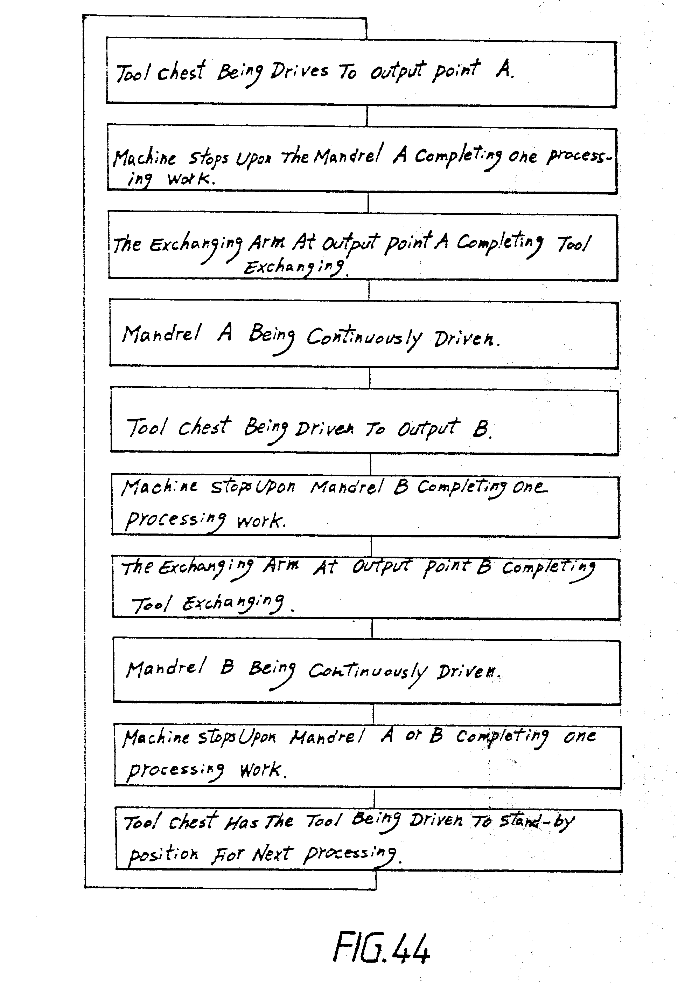

Fig. 44 shows the operation flow chart of two or more tool exchanging stations.

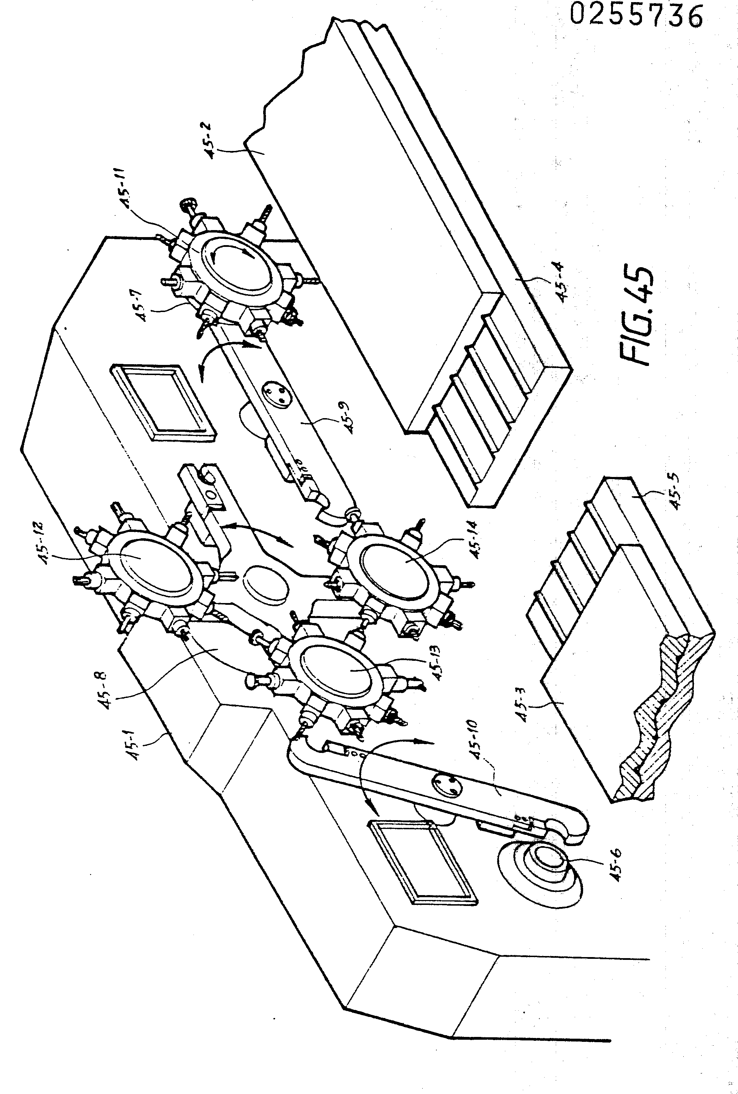

Fig. 45 shows the tool exchanging means by means of tool turret as an element.

45-1  Machine body.

45-2  Wroking table.

45-3  Working table.

45-4  Lathe bed.

45-5  Lathe bed.

45-6  Mandrel.

45-7  Mandrel.

45-8  Mandrel.

45-9  Exchanging arm.

45-10 Exchanging arm.

45-11 Tool turret.

45-12 Tool turret.

45-13 Tool turret.

45-14 Tool turret.

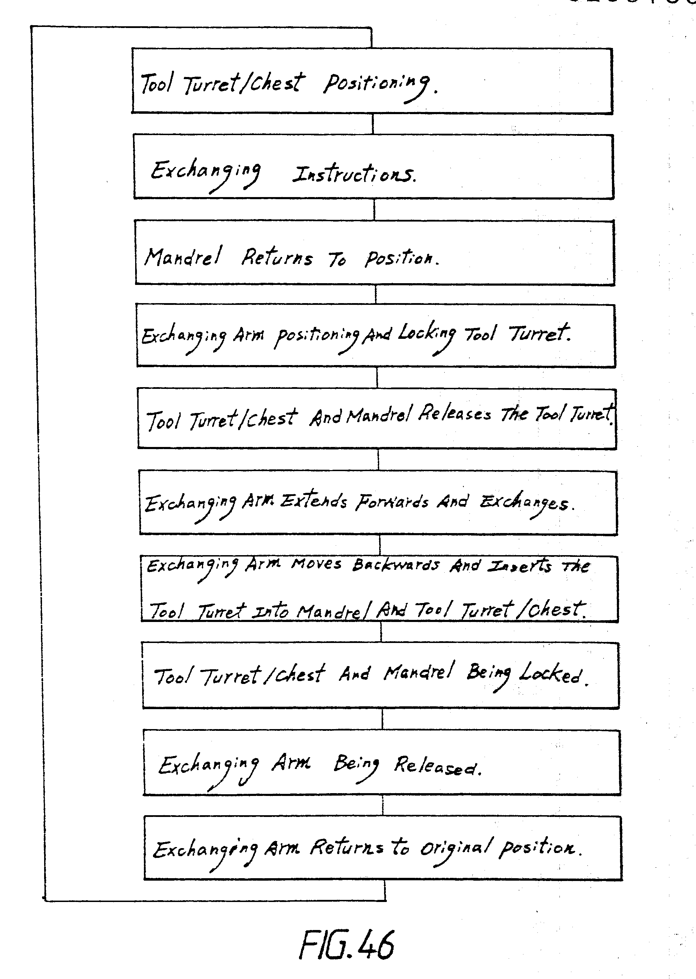

Fig. 46 shows the tool operation flow chart of the tool turret element.

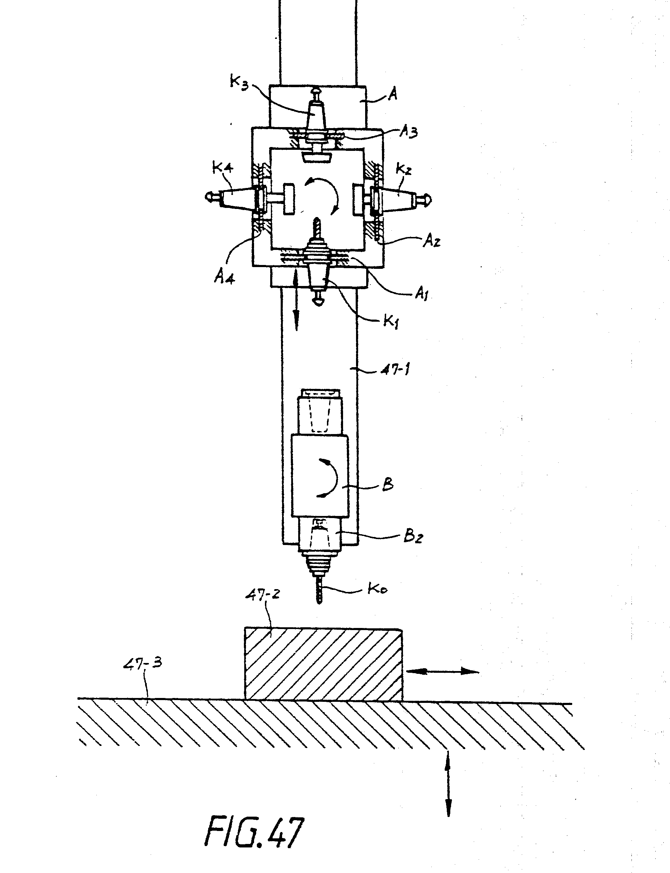

Fig. 47 shows an embodiment of an automatic tool exchanging system of tool chest moving type.

47-1   The common base of tool chest and mandrel.

47-2   Working piece.

47-3   Working table.

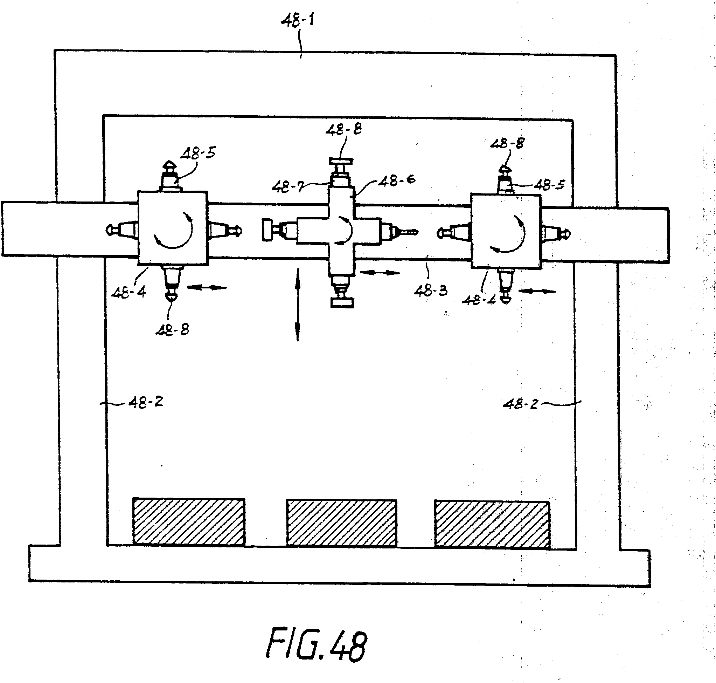

Fig. 48 shows an embodiment of an automatic tool exchanging system of tool chest moving type.

48-1   Top of the dragon gate.

48-2   Dragon gate column.

48-3   Lateral girder.

48-4   Tool chest.

48-5   Tool storage axle.

48-6   Tool post.

48-7   Tool mandrel.

48-8   Tool.

0255736

- 23 -

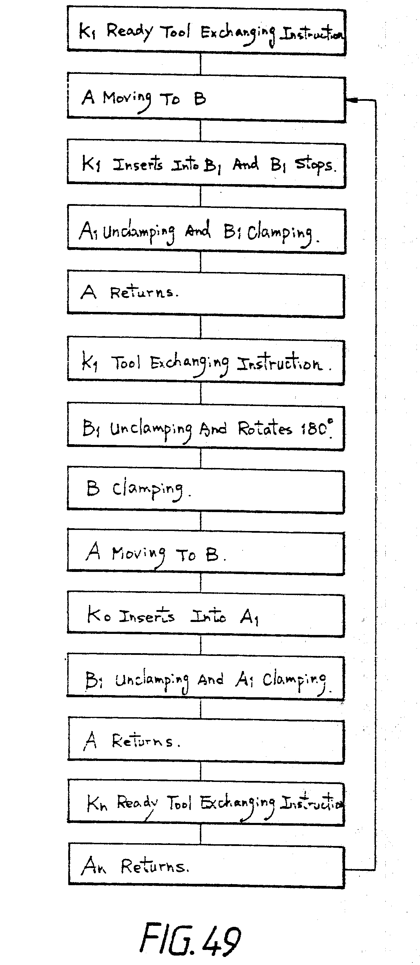

Fig. 49 shows the flow chart of automatic tool exchanging operation of tool moving type.

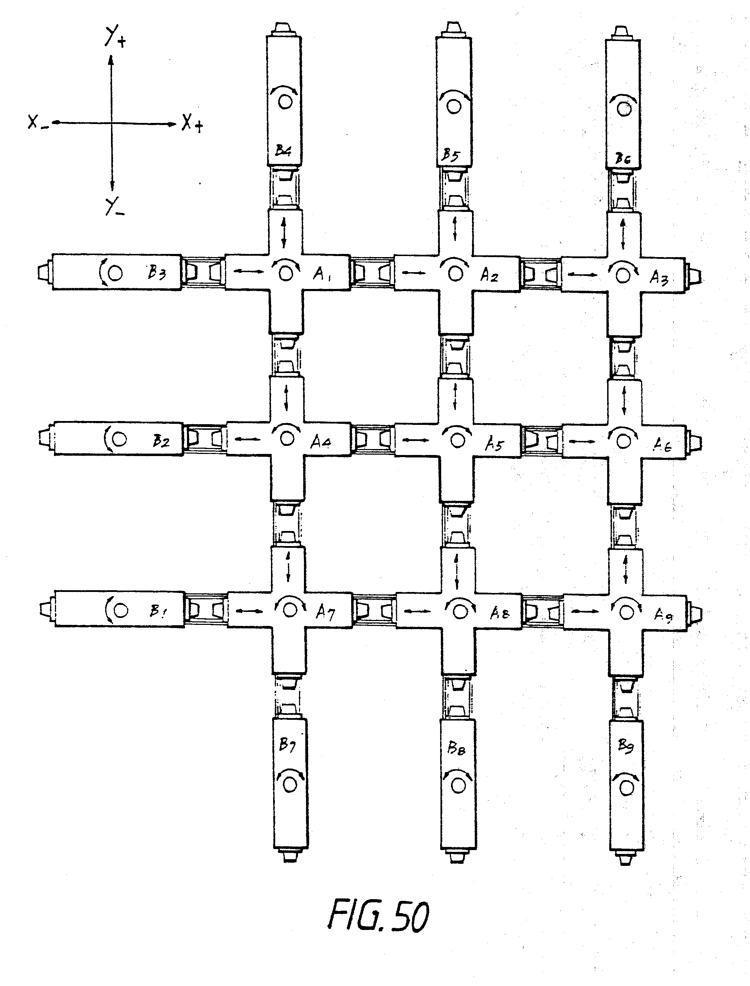

Fig. 50 shows an embodiment of an automatic tool exchanging system of a multi-set of tool chest moving type.

$A_1$--$A_9$ indicate the tool chests which may be rotated and may be driven for coordiante axle positioning.

$B_1$--$B_9$ show a tool mandrel, of which the dual end axles can rotate at $180^\circ$.

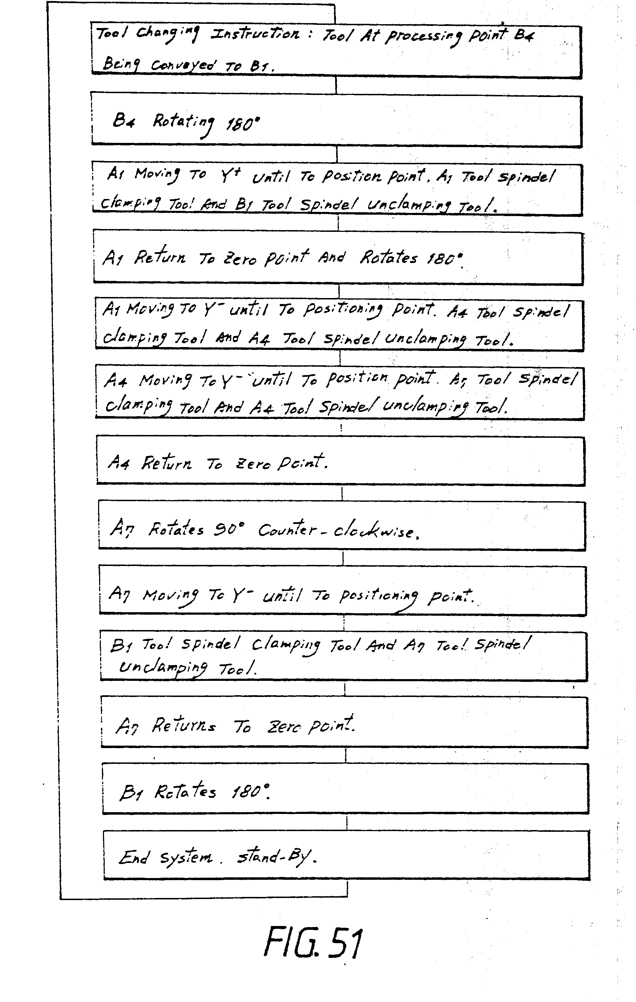

Fig. 51 shows the operation flow chart of the multi-set tool chest system.

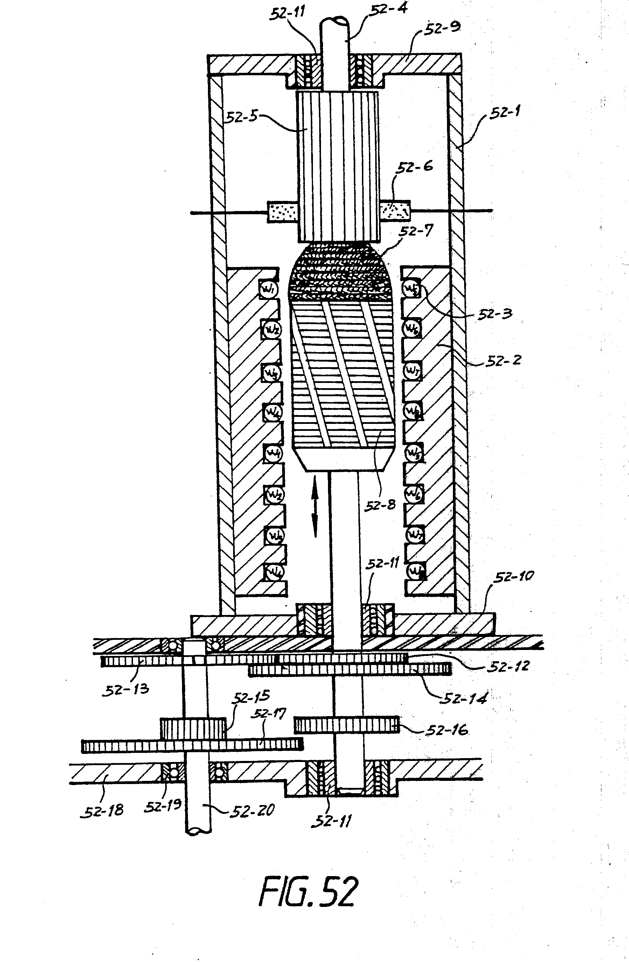

Fig. 52 shows a gear transmission means driven by an acial displacement D.C. motor.

52-1 Outer case.

52-2 The core of magnetic field.

52-3 Field winding.

52-4 Armature axle.

52-5 Commutators.

52-6 Brush.

52-7 Armature winding.

52-8 Armature iron core.

52-9 The rear cover of motor.

52-10 The front cover of motor.

0255736

- 24 -

52-11 Radial bearing.

52-12 Mid-speed driving gear.

52-13 Mid-speed output gear.

52-14 High-speed driving gear.

52-15 High-speed output gear.

52-16 Low-speed driving gear.

52-17 Low-speed output gear.

52-18 The lid of output end.

52-19 Output bearing.

52-20 Output axle.

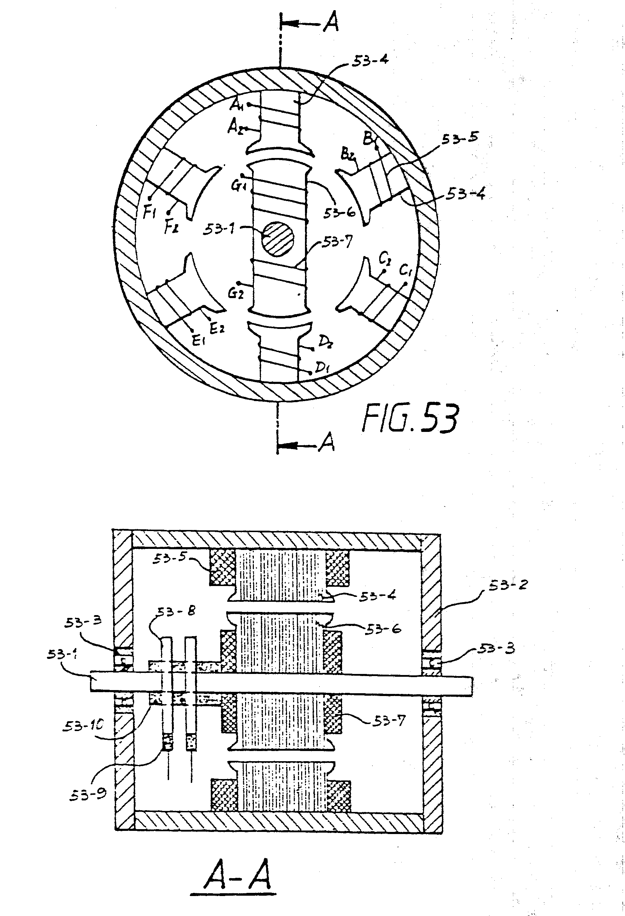

Fig. 53 shows an embodiment of stepper motor driven by A.C.

53-1  Output axle.

53-2  Outer case.

53-3  Bearing.

53-4  Stator iron core.

53-5  Stator winding.

53-6  Rator iron core.

53-7  Rotor winding.

53-8  Rotor slip ring.

53-9  Rotor brushes.

53-10 The insulating holder of rotor slip ring.

- 25 -

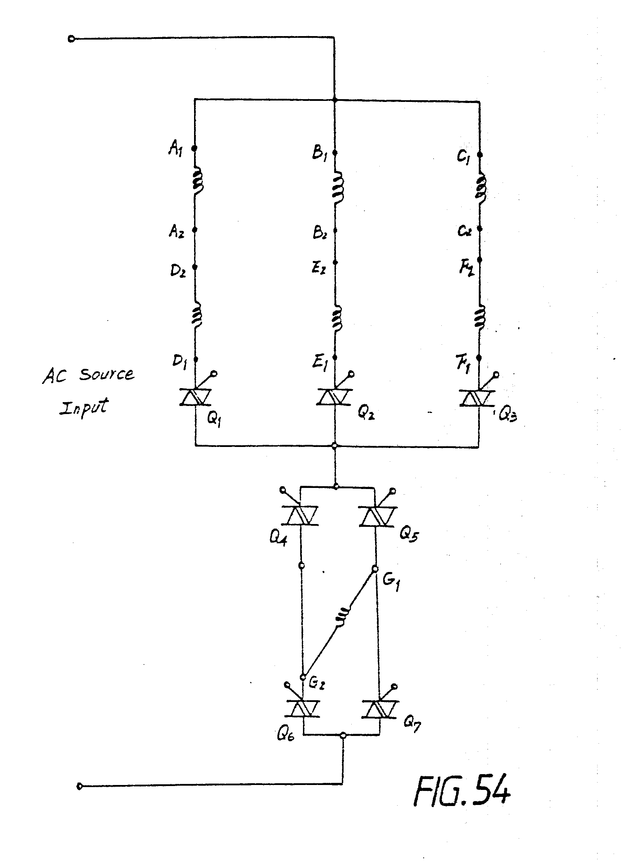

Fig. 54 shows the series connection diagram between the stator and rotor windings of motor in Fig. 53 and the control switch.

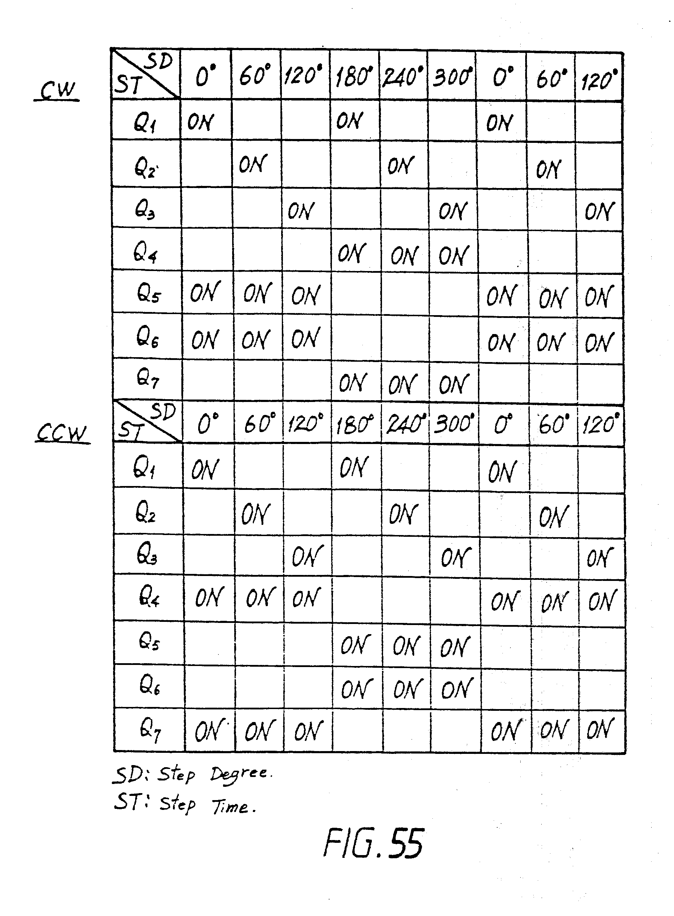

Fig. 55 shows the truth table of the motor operation in Fig. 53.

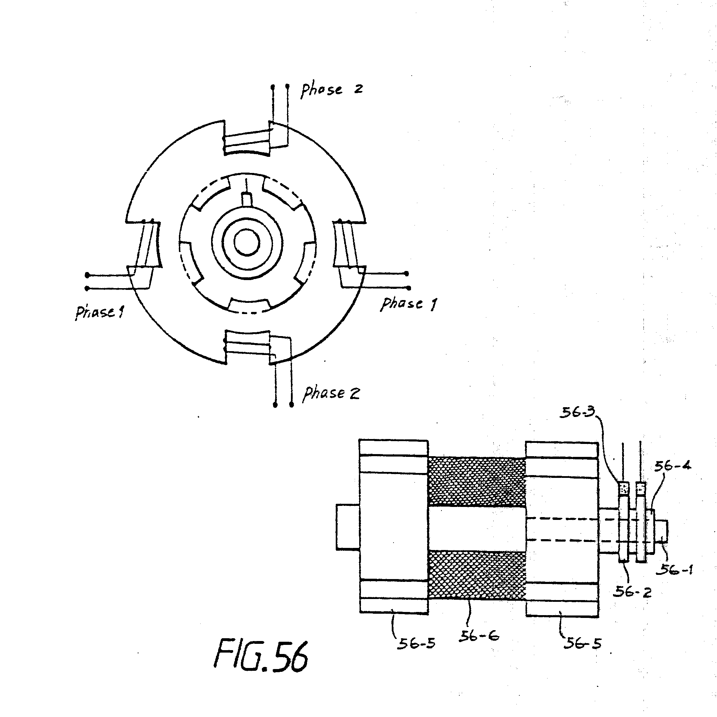

Fig. 56A, 56B shows an embodiment of two-section type of motor.

56-1   Output axle.

56-2   Input slip ring of rotor.

56-3   Input brush of rotor.

56-4   Brush holder.

56-5   The tooth-shaped iron core of rotor.

56-6   Rotor winding.

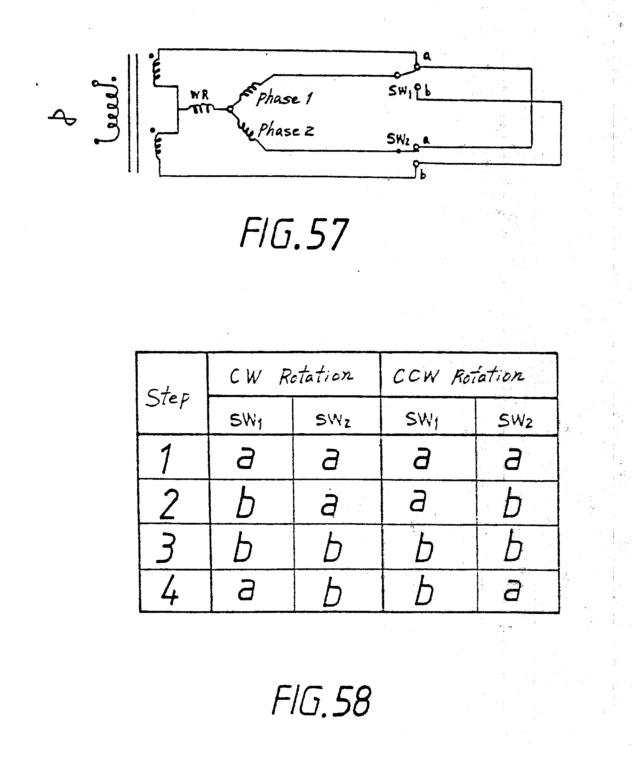

Fig. 57, 58 shows embodiment-1 of the motor driving circuit.

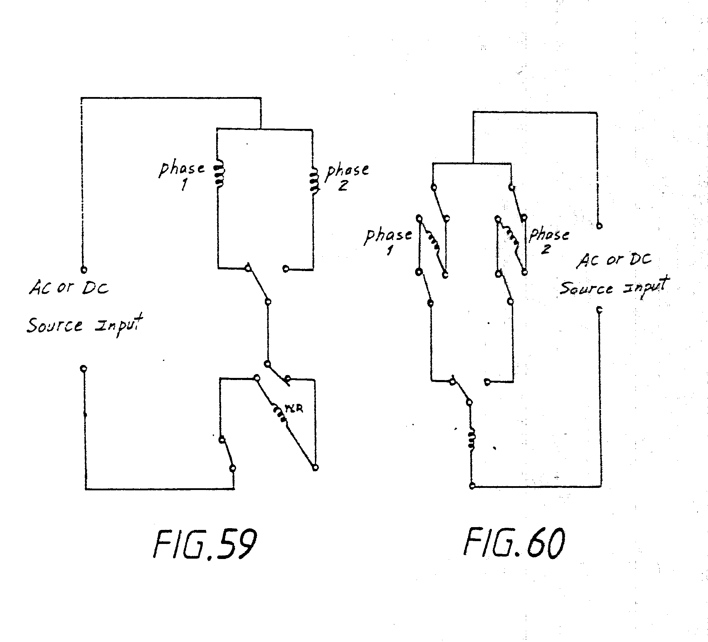

Fig. 59 shows embodiment-2 of motor driving motor.

Fig. 60 shows embodiment-3 of the motor driving motor.

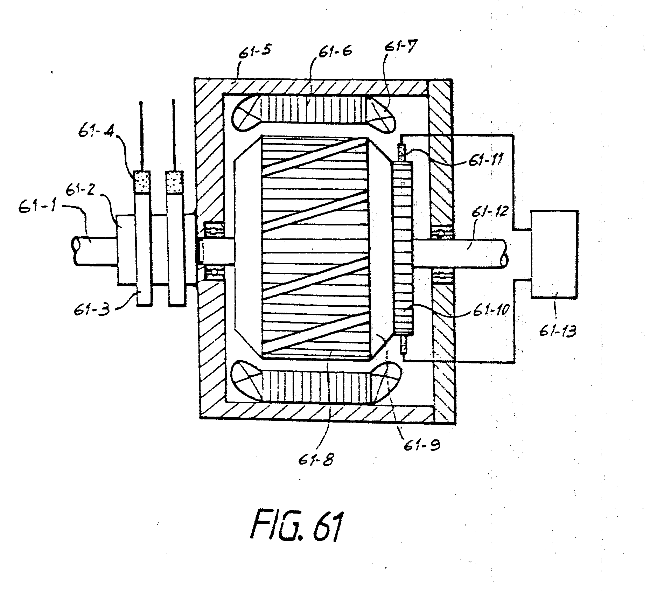

Fig. 61 shows the structure of a generated power self-excitation and transmission, electro-magnetic coupling, and driving means.

61-1   Input axle.

61-2   Insulating base.

61-3   Slip ring.

61-3  Slip ring.

61-4  Brush.

61-5  Outer case.

61-6  Iron core of field.

61-7  Field winding.

61-8  Armature iron core.

61-9  Armature winding.

61-10 Commutator.

61-11 Brush.

61-12 Output axle.

61-13 The resistance load or a regenerated feed back load.


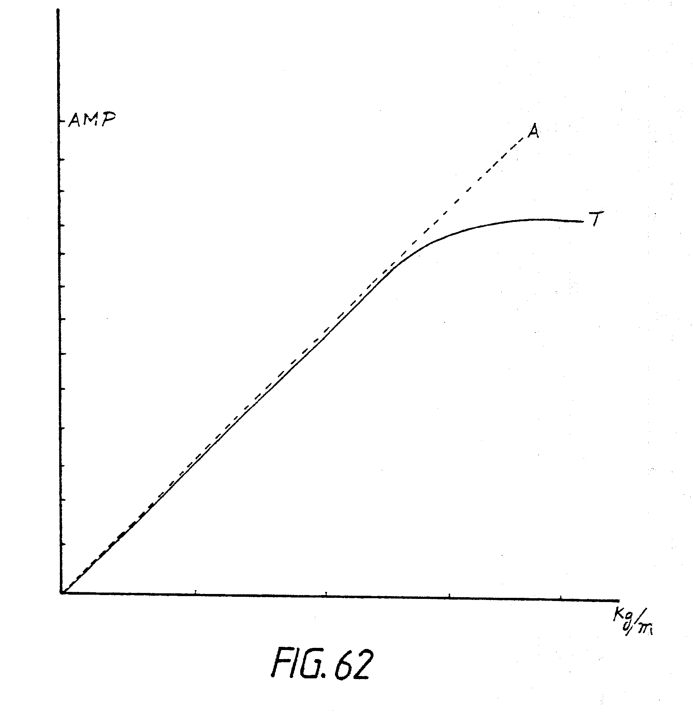

Fig. 62 shows the circuit and the characteristic diagram of the generated power self-excitation and transmission, electro-magnetic coupling, and driving means.

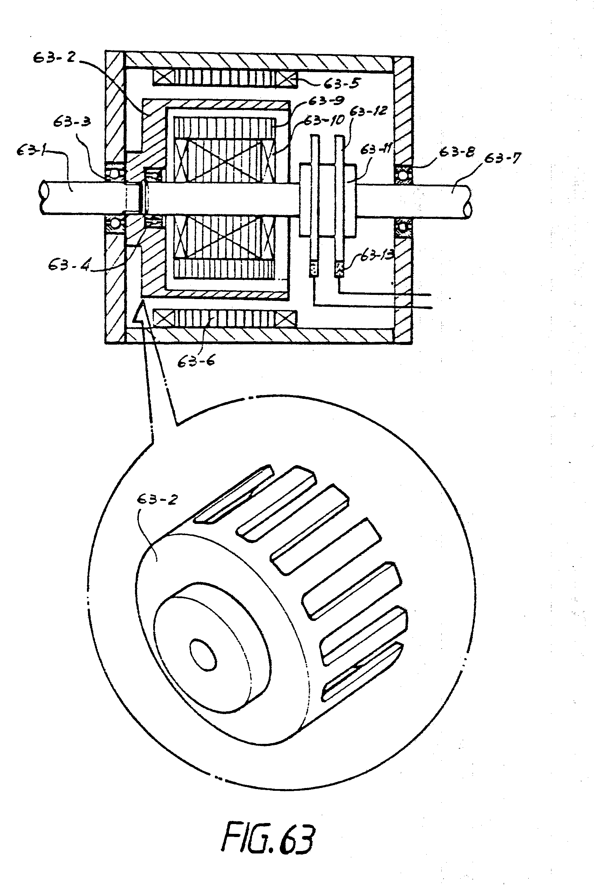

Fig. 63 shows an A.C. winding rotor type of generated power self-excitation and transmission, electro-magnetic coupling, and driving means.

63-1  Input axle.

63-2  The salient tooth-shaped magnetic conductance ring coupled to the input axle.

63-3  Bearing.

63-4  Bearing.

0255736

- 27 -

63-5   Field winding.

63-6   Field iron core.

63-7   Output acle.

63-8   Bearing.

63-9   Rotor iron core.

63-10 Rotor winding.

63-11 Rotor.

63-12 Rotor slip ring.

63-13 Rotor brush.

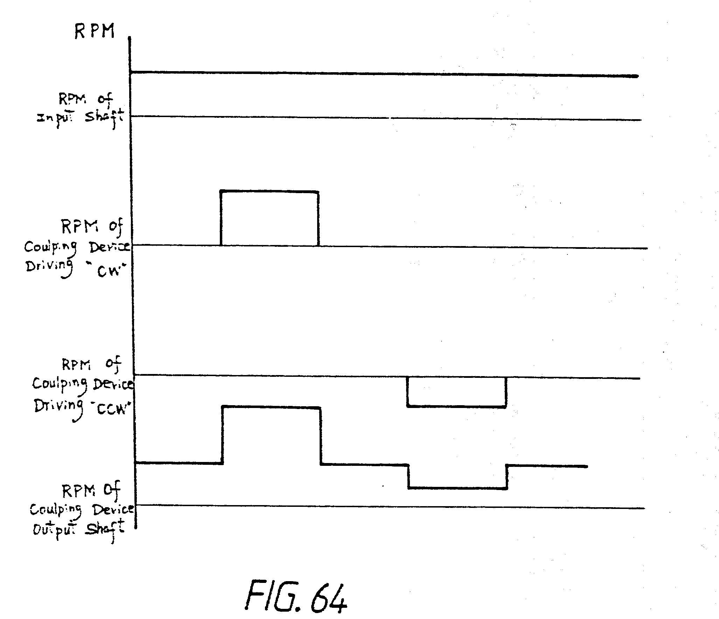

Fig. 64 shows a characteristic diagram of the generated power self-excitation and transmission, electro-magnetic coupling, and driving means.

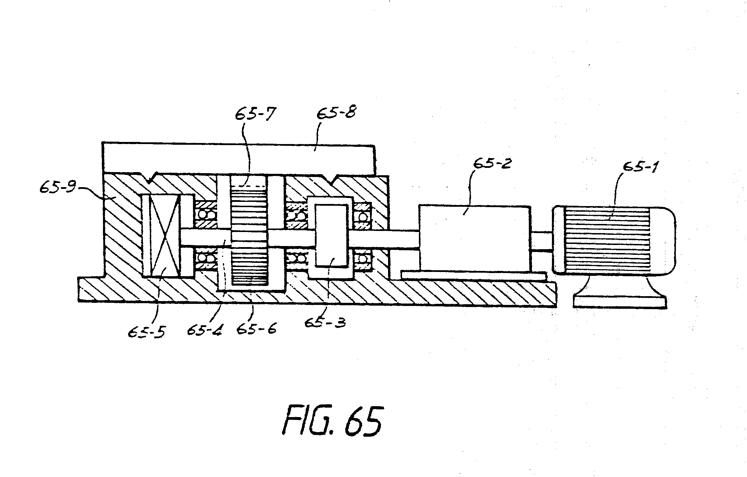

Fig. 65 shows a high frequency response brake means having flexible transmission means.

65-1   Driving motor.

65-2   Transmission system.

65-3   Flexible transmission means.

65-4   The output axle of a flexible transmission means.

65-6   Brake means.

65-6   Driving gear.

65-7   Gear rack.

65-8   Working table.

65-9   Lathe bed.


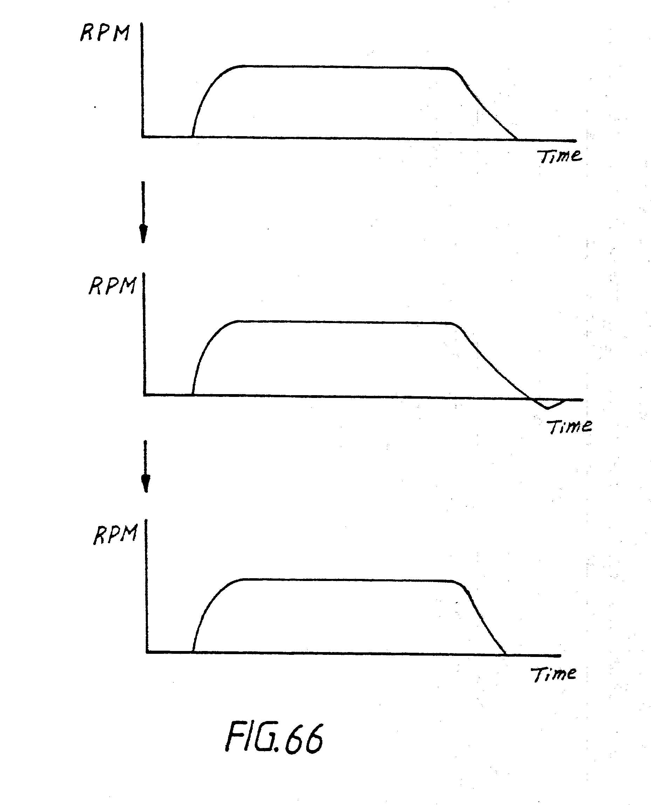

Fig. 66 shows the operation characteristics of a high frequency response brake menas having flexible transmission means.

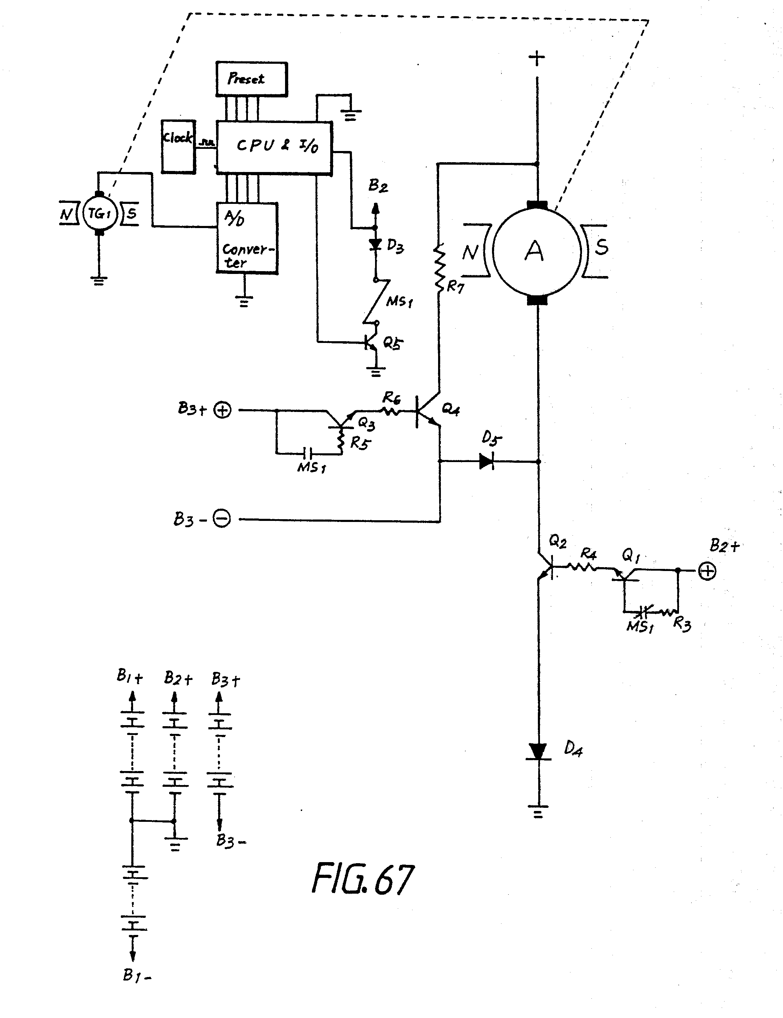

Fig. 67 shows a positioning control circuit of a digital type of analog accumulative quantity.

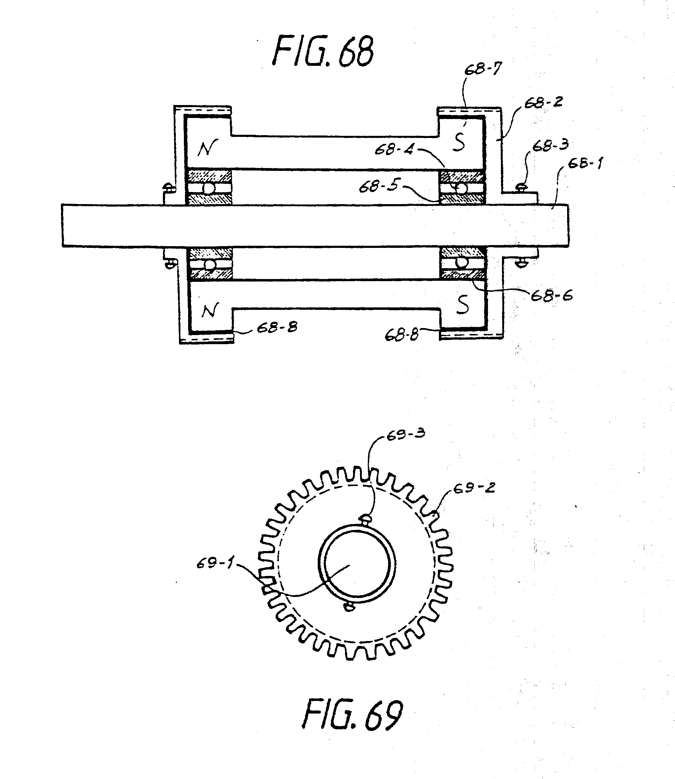

Fig. 68 shows the structure of a cup-shaped stepper rotor having low inertia.

68-1   Axle.

68-2   Cup-shaped rotor.

68-3   Lock screw.

68-4   Bearing ball.

68-5   Inner collar of bearing.

68-6   Outer collar of bearing.

68-7   Ring-shaped permanent magnet.

68-8   Air gap.


Fig. 69 shows the front view of a cup-shaped stepper rotor having flow inertia.

69-1   Axle.

69-2   Cup-shaped rotor.

69-3   Lock screw.

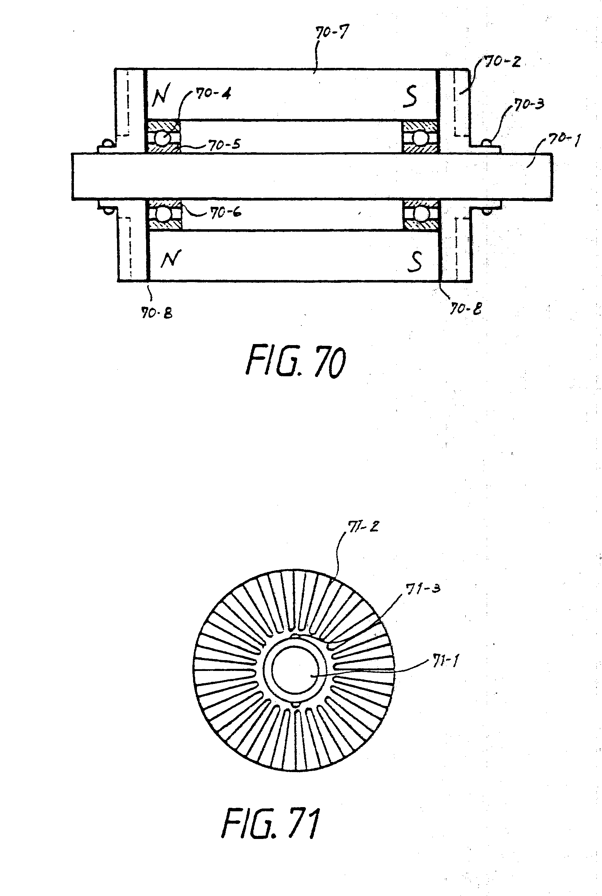

Fig. 70 shows the structure of a flat plate-shaped stepper rotor.

70-1  Axle.

70-2  Flat plate-shaped rotor.

70-3  Lock screw.

70-4  Bearing ball.

70-5  Inner collar of bearing.

70-6  Outer collar of bearing.

70-7  Ring-shaped permanent magnet.

70-8  Air gap.

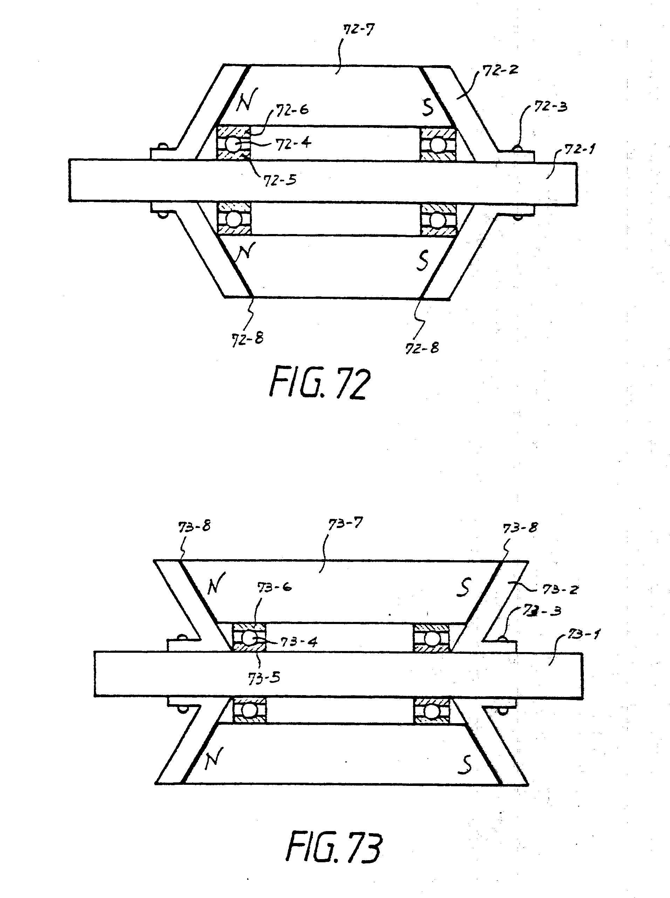

Fig. 71 shows the side view of the flat plate-shaped stepper rotor.

71-1  Axle.

71-2  Flat plate-shaped rotor.

71-3  Lock screw.

Fig. 72 shows the structure of a cone-shaped stepper rotor.

72-1  Axle.

72-2  Cone-shaped rotor.

72-3  Lock screw.

72-4  Bearing ball.

72-5 Inner collar of bearing.

72-6 Outer collar of bearing.

72-7 Ring-shaped permanent magnet.

72-8 Air gap.


Fig. 73 shows a concave type of cone-shaped stepper rotor.

73-1 Axle.

73-2 Concave and cone-shaped rotor.

73-3 Lock screw.

73-4 Bearing ball.

73-5 Inner collar of bearing.

73-6 Outer collar of bearing.

73-7 Ring-shaped permanent magnet.

73-8 Air gap.


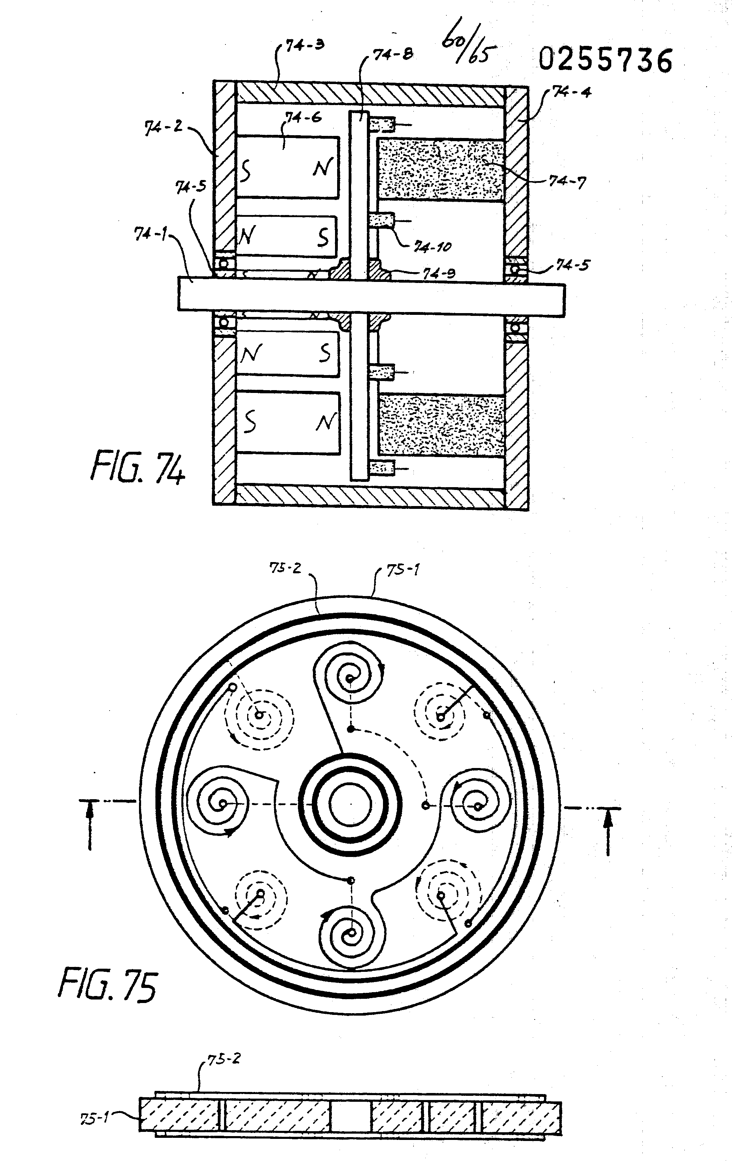

Fig. 74 shows the structure of a printing type of stepper motor.

74-1 Axle.

74-2 End lid.

74-3 Outer case.

74-4 End lid.

74-5 Bearing.

74-6  Permanent magnet.

74-7  Ring-shaped magnet core.

74-8  Printing winding type rotor.

74-9  Fixed ring.

74-10 Brush.


Fig. 75 shows a printing type of stepper rotor with the conductor being disposed in an eddy-current shape.

75-1  The insulating portion of the printing winding type rotor.

75-2  The conducting portion of the printing winding type rotor.


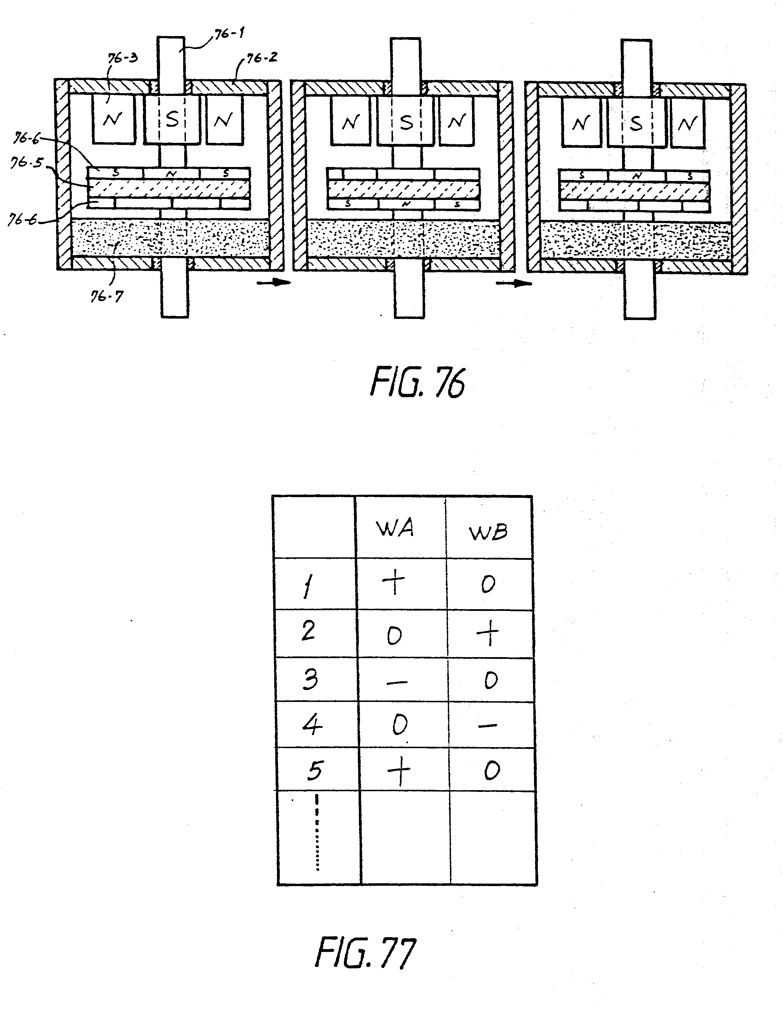

Fig. 76 shows the operation flow chart of the printing type of stepper motor.

76-1  Axle.

76-2  Outer case.

76-3  Permanent magnet.

76-4  Bearing.

76-5  The insulating portion of the printing winding type rotor.

76-6  The inducting portion of the printing winding type rotor.

Fig. 77 shows the motor operation corresponding to the flow chart in Fig. 76.

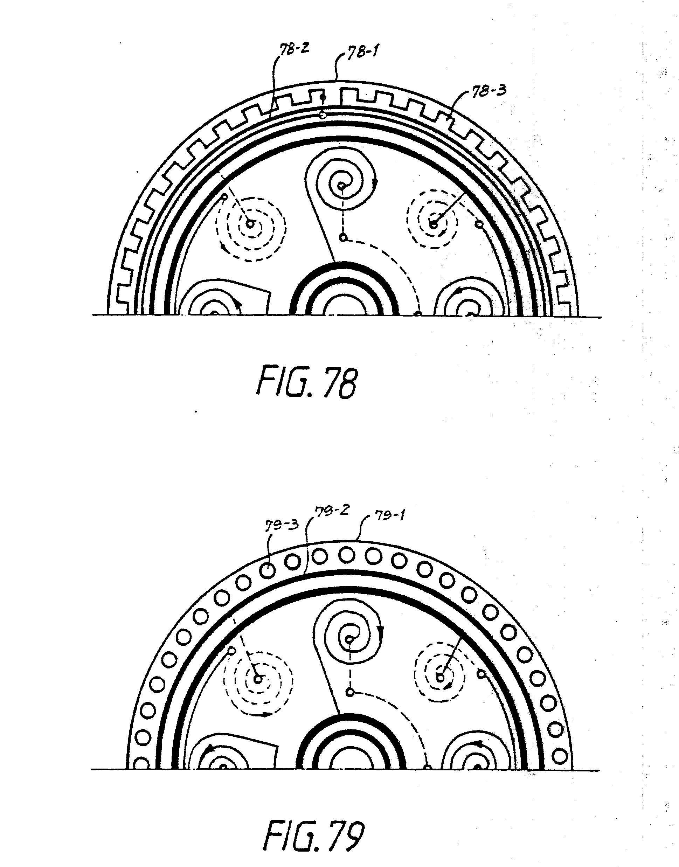

Fig. 78 shows the printing type rotor having pulse induction winding structure.

78-1  The insulating portion of the printing winding type of rotor.

78-2  The conducting portion of the printing winding type of rotor.

78-3  The light passing hole of angular displacement sensing.

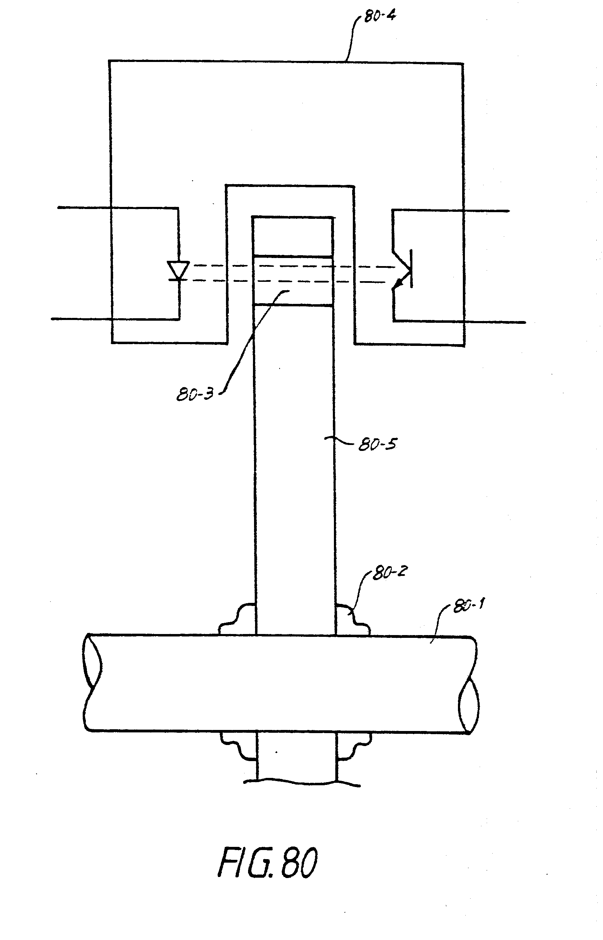

Fig. 80 shows an embodiment of the photocell sensing means.

80-1  Axle.

80-2  Fixed ring.

80-3  Light passing hole.

80-4  Photocell sensing means.

80-5  The insulating portion of the printing winding type of rotor.

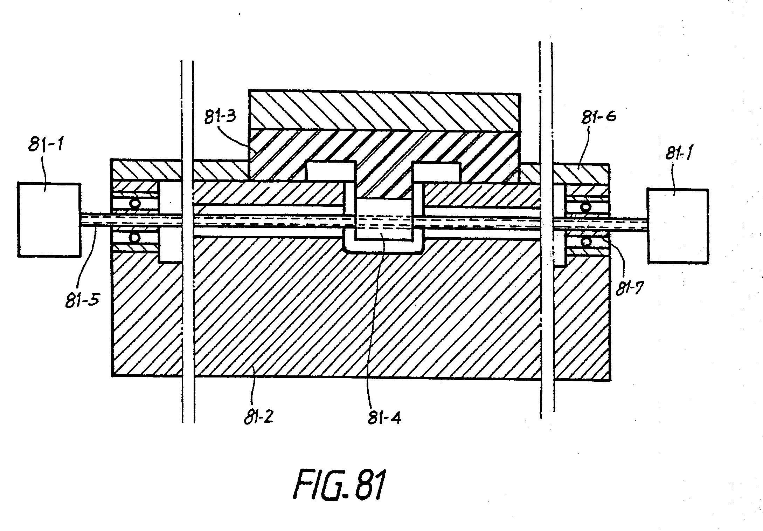

Fig. 81 shows a working table being driven with both ends of a guide screw.

81-1  Driving motor.

81-2    Lathe bed.

81-3    Working piece.

81-4    Driving nut.

81-5    Driving screw of working table.

81-6    The upper protection lid.


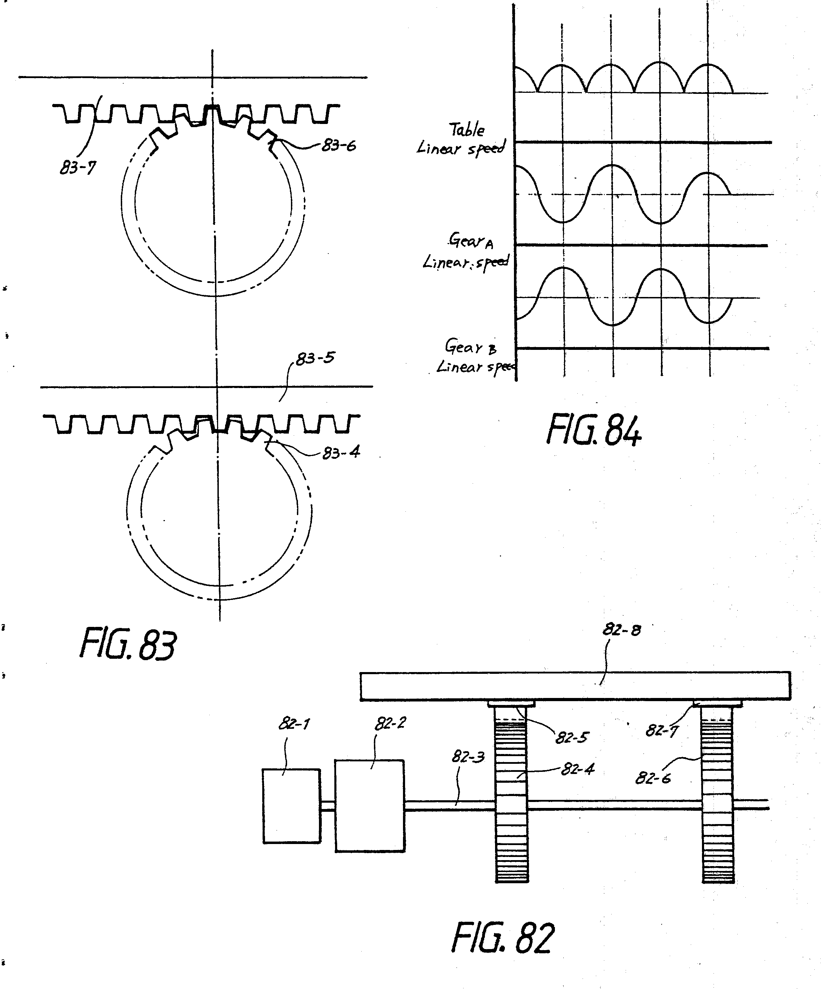

Fig. 82 shows the structure of the phase difference type of driving gear assemble which has a low vibration ratio.

82-1    Driving motor.

82-2    Gear box.

82-3    Transmission shaft.

82-4    Driving gear.

82-5    Gear rack.

82-6    Driving gear.

82-7    Gear rack.

82-8    Working table.


Fig. 83 shows the phase difference upon the gear and the gear rack being engaged each other.

83-4    Driving gear.

83-5    Gear rack.

83-6    Driving gear.

83-7    Gear rack.

Fig. 84 shows the pulse ratio upon the phase difference type and the driving type being combined together.

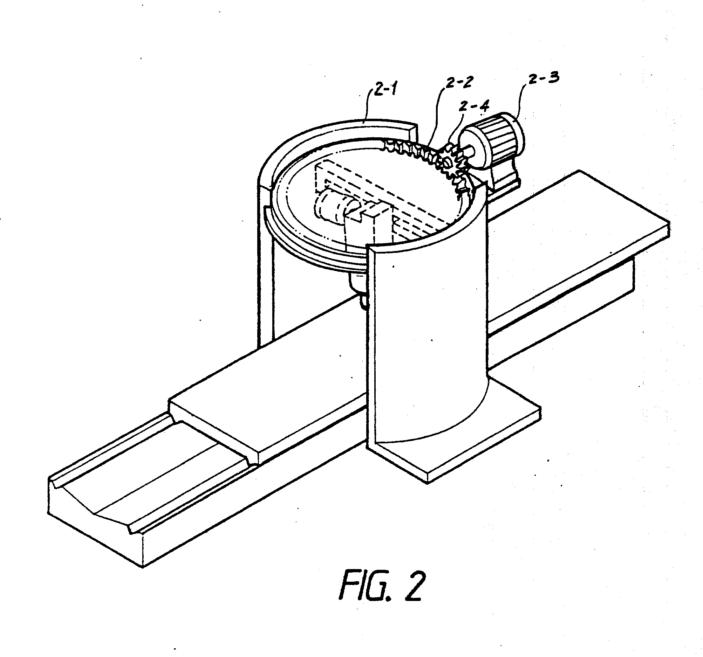

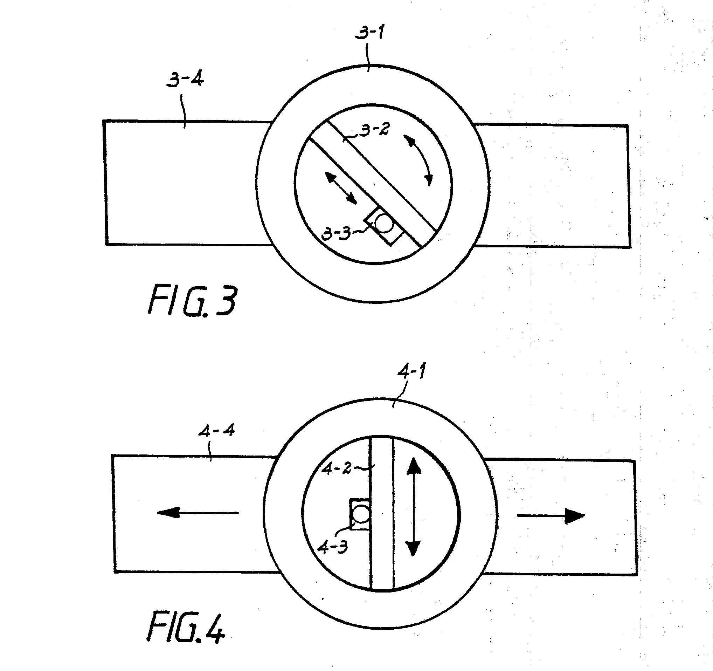

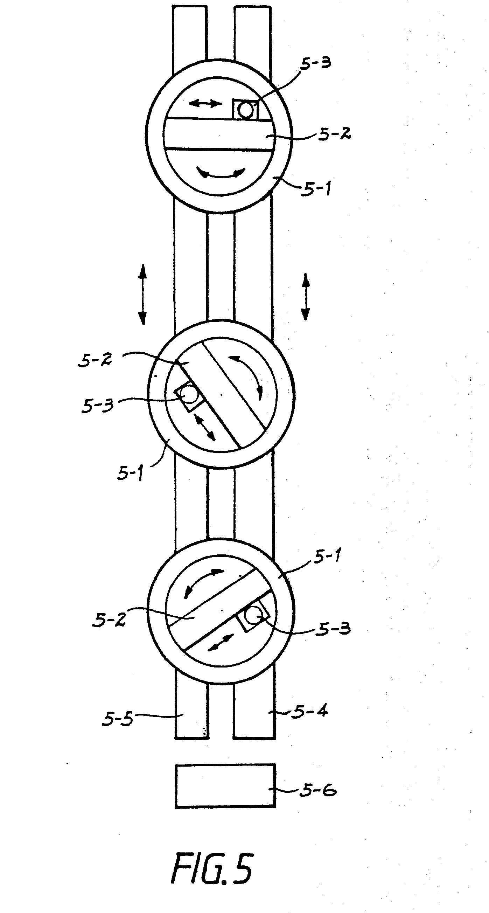

1) The dragon-gate lateral girder in the conventional lathe is usually coupled to the column of the dragon-gate for furnishing the tool post so as to perform planing or milling processing. In this invention, a rotary lateral girder (1-2) has been designed and is to be coupled to the dragon-gate top (1-1), as shown in Fig. 1. In addition to one or more sets of ring-shaped supporting structures (1-4), the rotary lateral girder and the outer supporting and slide surface may be a partial circle (2-1) or a fulcrum structure as shown in Fig. 2. The multi-ring structure being used for lathe and planing processing is shown in Fig. 3 and Fig. 5. The slide surface of said lateral girder may use a bearing, air film, or oil film as a sliding medium so as to minimize friction. In addition, a known mechanical or hydraulic lock method may be provided so as to lock-up the said rotary lateral girder (1-2), if necessary, to perform lathe cutting, milling, planing grinding, drilling and boring on a work piece. The said rotary lateral girder (6-4) may be provided with a symmetrical and synchronous balance tool post (6-2) (shown in Fig. 6_ or a synchronous and symmetrical balance block (7-5) (shown in Fig. 7) so as to balance the said rotary lateral girder (7-4) upon being used for lathe cutting, the center tool post (7-2) deviates from the center to cause an imbalance effect. The said synchronous and manually locked in position, or by means of a transmission method (such as guide screw (7-3)) which is driven in the opposite direction to the said lateral girder (7-4) so as to obtain a balanced effect at any time, and the same balance tool post (7-2). The said rotary lateral girder (8-2) may be driven with either an external driving motor as shown in Fig. 8 or with a motor (8-3) for the girder itself. The power supply for the girder motor (8-3), the tool post laterally feeding motor, and the mandrel motor may be introduced with a disk or a slip-ring (8-6) and a corresponding brush (8-7).

On the aforesaid structure, one or more sets of auxiliary arms (9-11) may be provided; one end of the said auxiliary arm (9-11) is connected to the said lateral girder (9-2) at a selected angle, while the other end is coupled to the guide rail to strengthen the structure and maintain the precision (as shown in Fig. 9). On the said auxiliary arm (9-11), an individually or simultaneously operating tool post may be furnished to perform milling, planing grinding, or polishing for a work piece (especially on the same work piece). The operation of the tool post (9-8) may be accomplished by manual operation or well-known methods such as the guide screw (9-6).
When the rotary lateral girder (9-2) is being used as a vertical lathe, the lateral tool feeding motor (9-5) on the lateral girder will feed the tool, and at the same time, the said lateral girder (9-2) is locked up at given direction so as to have the tool on the mandrel tool post (9-8) performing planing milling, grinding and boring processing. The said rotary lateral girder may also be installed on the dragon-gate (10-1) column (10-2) (as shown in Fig. 10) so as to perform processing work on the side of working piece. Further, the said dragon-gate structure may also be furnished with a conventional dragon-gate or multi-dragon gates so as to perform a series of tool feeding processing on a work piece moving reciprocatingly as shown in Fig. 11.

The aforesaid ring-shaped lateral girder (12-6) may be installed on the main lateral girder of a conventional dragon-gate type lathe as shown in Fig. 12, and 13.

2) Another feature of said tunnel type or dragon-gate type of mechanical processing system is the novel design in the working table which will offer more conveniences for processing, and eliminate some of dead angles in terms of processing direction further details are described as follows:

a) The working table may be driven singly, or simultaneously in synchronous or asynchronous in longitudinal direction with divided sections; the difference from the conventional working table is that it may, if necessary, be connected in series with a plurality of sections. which may be similar in size and height, each working table is driven with a separate motor, or all said working tables are driven with one motor as shown in Fig. 14 thru 16. One set of working tables (17-7) used for hauling purpose may be driven; or by means of the interlock means (17-11) between working tables (17-7) as shown in Fig. 17, or by means of a working piece (18-10) to join the working table (18-7), a series of tables may be driven together as shown in Fig. 18. Furhter, in case of a working piece (19-10) being rather big, the working table (19-7) may be suitably dispersed to support the working piece (19-10) with the heavy loading points as shown in Fig. 19. When every said working table (19-7) being driven separately, they may be driven in synchronous manner, or may be driven with the given sets having coupling means or being interlocked one another with a working piece (19-10). The latter method is good for the machine which has only a part of working tables (19-7) being furnished with driving means.

The major feature of said structure is that a working piece (19-10) which is a long in dimensions and has to be processed at its bottom may be placed on two working tables (19-7); in such case, one set or more than one set of working tables (19-7) under said working piece (19-10) may be installed with tool post (19-11) so as to perform processing work during said working piece (19-10) being in process or in static condition from the bottom as shown in Fig. 19.

b) A shrapnel type working table as shown in Fig. 20 is a structure in which one or more than one set of small working tables (20-2) are provided underneath a main working table (20-1), being driven to the same direction as that of said main working table (20-1). Said small working table (20-2) may have the same length as that of the main working table (20-1) or may not, or may be made in section structure as mentioned in "(a)" above so as to increase the processing result. Said main or small working table may have a separate driving means, or only said small working table (21-2) may be used for processing each other as shown in Fig. 21.

3) A rotary working table:

In addition to the linearly reciprocating type working table of the aforesaid tunnel type or dragon-gate type of mechanical processing system mentioned in "2)" above, a circle type, ring type, or other selected shapes of rotary working table also be designed.

Fig. 22 shows a well known rotary working table (22-1), of which the fixing base (22-2) is attached to the lathe bed (22-3) by using inter-connecting or mechanical interlocking means (22-4), and may be driven as well. Therefore, it not only can be rotated, but also can be separated in longitudinal directions as mentioned in (a) of 2) above; it can also be arranged in multi-row manner to expand the processing functions as shown in Fig. 23. Said rotary working table (22-1) may also be designed into one or more than one layer in co-axial ring-shaped structure as shown in Fig. 24, and on the surface of each said layer, a driving motor may be provided for same direction or opposite direction, for synchronous or asynchronous, for single or joint driving so as to perform processing work to the working piece on the adjacent tables as shown in Fig. 25A-25E and Fig. 26-27. The aforesaid ring type working table may also be designed on assembly basis to have one or more than one section with one or more than one layer as shown in Fig. 28; or it may be combined and mixed with the circle type rotary working table as shown in Fig. 29.

4) The mixed working table with linearly moving and rotary moving working tables has a structure shown in Fig. 30 thru 35, of which the feature is that said two types of working tables may appropriately used, and each type has its own

0255736

separate driving motor so as to make suitable selection processing.

5) A major element working table group and a exchangeable working table group structure formed by means of the aforesaid various types; the features are as follows:

a) The linearly moving working table group: It comprises a multi-row and multi-section working tables having equal or un-equal length, width, height, and having a same level surface or a slanting angle or are each other in any suitable geometric shapes; the said working tables may be driven separately or in synchronous coupling manner. It may comprise some driving working tables and some working tables that may not be driven (the fixed type) as shown in Fig. 36.

b) The rotary working table group: It comprises a multi-set of rotary working tables with selected diameter, height, and related mechanical positions, or the ring-shaped working table; on said tables, a selected and fixed tool is provided respectively so as to process the working piece.

c) A mixed working table group comprises the type of working tables described in (a) and (b) above.

d) A continuous and circulated working table group: It comprises the working tables mentioned in (a), (b), (c) of 2) above which are driven in a given sequence to have a continuous displacement along the guide rail on a base for processing the working piece. Said working table moves from one lathe bed to another lathe bed by means of an auxiliary rail. The structure and operation of siad design in this invention are described in detail as follows:

A working table group having working table exchanging station: In addition to the displacement circulaty method by means of the rail in said processing system, the working tables may be exchanged thru the exchanging station as shown in Fig. 37, and the flow chart of the exchanging action is shown in Fig. 38-39, Fig. 40 shows an exchanging station for a multi-set type of working table, and it is designed in matrix type.

6) The aforesaid various kinds of working tables may be applied to the novel combinations as follows:

a) They may be used by combining with the various kinds of dragon-gate and lateral girder structures mentioned in "1)" above.

b) The working table mentioned in "2)" above may, in part or completely, be installed at the outer side of the dragon-gate (41-2), if necessary, as shown in Fig. 41.

c) Upon being used in the working table sets of the various dragon-gate mentioned in "1)" above, they may if necessary, be placed in the space at the lower portion of the dragon-gate, or try to reserve some space for the working piece as shown in Fig. 42.

d) Each of said working tables is provided with driving motor or other driving element; part of said working tables may, if necessary, be without driving means, but being either movable or non-movable.

e) A selected one or more than set of said working tables may be provided with driving means to drag the rest working tables by means mechanical interlocking means or working piece.

f) The means and methods mentioned in (c) thru (e) above may also be used for lathe without dragon-gate structure; the processing work may be done each other by means of a working table group manner.

7) Automatic tool exchanging element:

In the conventional automatic tool exchanging means, there are tool turret, and tool chest, etc., the automatic tool changing means of this invention not only can be fitted to the conventional tool exchanging means, but also possesses many new features as follows:

a) A two or more than two sets of tool exchanging position and exchanging arm (43-9) (43-10), and a corresponding sets of tool chests (43-8) with a common tool spindle. The features are that the supporting tools can furnish every tool spindles simultaneously, or each tool spindle may use one given set of tools in a specific sequence; one lathe may have a plurality of tool spindles, or the tool spindles of different lathes may commonly use a tool chest (43-8). In the processing system of this invention, one or more than one set of tool chest (43-8) may be furnished so as to support the need of the tool spindle group as shown in Fig. 43, and its flow chart is shown in Fig. 44.

b) The tool turret exchanging unit: The tool turret in this invention is an improved conventional tool turret; said unit not only has the conventional tool turret functions of angular rotation and locking up, but also has the features of positioning coupling lock between the tool turret (45-11), (45-12), (45-13) and the tool spindle driving structure, and of exchanging the tool turret each other three an exchanging arm (45-9), (45-10) after being unclamped from the spindle as shown in Fig. 45.

The flow chart of said tool turret exchanging operation is shown in Fig. 46. The biggest feature of said means in application is that the currently using tools in a sequence provessing may be mounted on one turret to simplify the tool exchanging operation, which is similar in nature to the micro-program in the computer software portion.

c) A tool chest motion type automatic tool exchanging device (ATC) which is directly driven by a direct type servo-means using a common base seal with the spindle tool turret as shown in Fig. 47 thru 48, of which the structure and components are as follows:

(1) The base seat structure:  It may be a fixed lathe bed or a driven working table base installed on the lathe bed; on said base seat, a fixed seat for the spindle tool turret and the tool chest is provided.

(2) The spindle tool turret structure:  It comprises one or more than one set of equal angle or un-equal angle arranged tool chuck means, and it may be driven with a motor or a fluid pressure means to rotate clockwise or counter-clockwise, or to stop at a given position.

(3) One or more than one set of tool chest structure to be driven by a servo-means:  The feature is that said structure may be installed on the lathe bed, and is capable of receiving instructions, of making quantitative and reciprocating displacement driving; on which, a tool selecting or tool positioningly storing means able to rotate clockwise or counter-clockwise and able to store specification tools may be furnished.

The exchanging procedures of said automatic tool exchanging device ————————— in which "A" is the tool chest, $A_1$-$A_4$ are the stand-by tool post of the tool chest, K0-K5 are tools, "B" stands for tool post, $B_1$-$B_2$ stand for tool spindle, "C" stands for tool chest fixing seat, "D" stands for base seat are shown in Figure 49.

The aforesaid tool chest may be designed into a tool chest system including a plural sets as shown in Fig. 50. The main feature is that, in addition to said tool chest exchanging tools with the adjacent tool chest by means of its displacement or the automatic tool exchange arm. Another function of said system is that it may convert the rotary type tool chest into a multi-output position "ATC" system, of which the feature is that it will have two or more than two sets of exchanging arms so as to have selected tool in the tool chest being exchanged with the outer tool spindle or other tool chest; the flow chart of which is shown in Fig. 51; consequently, an economic tool chest system may be established.

8) Spindle driving system:

Owing to the repeated starting and stop operation, the requirements on starting efficiency, energy saving, and the brake means to stop the spindle have become more important.

0255736

- 46 -

In addition to the known brake means, such as the A.C. motor, electric or hydraulic menas, a new spindle motor brack means has been developed as shown in Fig. 52, which shows a D.C. motor. The feature of said D.C. motor is that the field iron core (52-2) is thicker than that of the armature (52-8), and the field windings (52-3) are an axial overlapped multi-windings, of which each may be provided with exciting control. The motor bearing (52-11) in an axial bearing which has the features of axial displacement and rotation. Since the length at the both ends of said motor shaft has suitably designed, the variation of exciting current applied to the axial over-lapped field windings will cause the armature making a corresponding axial displacement, which will generate the following functions:

a) Tool feeding during rotating, such as, for drilling or milling, etc.

b) Reciprocating motion during rotating, such as for boring or processing the rivet head.

c) To have the gear assembly mounted on said shaft generating a displacement so as to change the corresponding engaged gears to vary the output speed ratio; further, it may make a micro or intermittent drive with a D.C. motor so as to prevent the gears from being collided each other.

d) To obtain dutch or brake function by means of the axial thrust to push a friction piece.

e) To generate an axial vibration effect by means of controlling the current applied to the field winding and exciting winding for removing the small metal wastes and reducing the cutting resistance.

9) The said design may also be applied to A.C. motor. It is an A.C. and D.C. series repulsion stepper motor by means of the polarity relations of A.C. or D.C. power applied to stator ( 53 -4) and rotor ( 53 -6) to generate a servo-step function, and its structure is shown in Fig. 53. The major difference between the design in this invention and the conventional D.C. stepper motor is that the exciting A.C. or D.C. power of the rotor (53-6) in this invention is delivered thru the slip ring (53-8), and the rotor exciting winding is connected with the stator winding(53-5) in series (shown in Fig. 54) thru the step-drive polarity commutation switch. Thus, the polarity relation of the stator and the rotor connected in series may be varied together with the power supply without affecting the attraction effect between poles. Moreover, the polarity relation may be varied by sequently commutating the stator winding (53-5) and by applying A.C. or D.C. power thru the polarity sequence commutation switch connected in series between the stator and the rotor, and the truth table of said commutation for step function is shown in Fig. 55. Further, the use of said repulsion stepper motor may include the known multi-stage and over-lapped type. Fig. 55A thru 60, show another embodiment and the control circuit thereof.

10) A magnetic coupled driving device with self-exciting with self-generated power and transmission functions.

The input shaft of said device is coupled to the mechanical shaft (61-1) of a D.C. or A.C. motor, or other rotation means, or an engine, windmill, or watermill, and the output shaft (61-12) of said device is used for delivering output at various speeds such as synchronous, or faster, or slower speed. By means of an electric control switch, said input or output shaft may be connected together, or disengaged each other, i.e.c, like a clutch operation. The embodiment of said device is shown in Fig. 61, of which the feature is by using generated power damping for coupling, and it comprises:

(1) One set or more than one set of shaft or wheel means for rotary driving input or output. One end of said device is provided with permanent magnet or external D.C. excited field, which has one or more than one set of slip rings (61-3) and brush set (61-4). Said brush set (61-4) is separately provided with the brush holder set and the related parts, which are used for the input of the exciting current of field, and for the input or output of current of the following armature winding. The other end or the both ends of said device are furnished with terminal cases, axles, and bearings so as to mount an armature winding (61-9) rotor (61-8) that may either generate power or may be driven with electricity. On said rotor, a commutation brush set is furnished to couple the commutator segment set (61-10) of said armature.

(2) One or more than one set of armature winding rotor (61-8), which may be a tooth-shaped iron core armature and printing type or cup-shaped rotor, or a rotor without slot but with a lap winding, a wave winding or frog leg winding; it may be connected with the field winding (61-7) in shunt excitation, series excitation, or compound excitation; the commutator segment (61-10) of said rotor are coupled to the said field structure. The shaft of said rotor is opposite to the input or output end of said field structure. Another feature of said rotor is that its output shaft (61-12) end is furnished with separate induction D.C. or A.C. speed sensing generator, or photocell electro-magnetic type of angular displacement sensing means so as to obtain a direct proportional signal to the output speed. The fixed end and the rotary end

0255736

- 50 -

of said means may respectively be installed on the input end and the output end so as to obtain a direct proportional signal to the rotation difference by means of a slip ring and a brush set.

The coupling and speed output function of the aforesaid device may generate a coupling torque by means of the generator effect, or use a mixture of said both to attain the goal. The output control method of said device is as follows:

When being coupled by means of generated power for self-excitation, a switch means may be connected between the slip ring or ship disk brush input terminals and the commutation segment brushed of the armature for coupling or decoupling control. It may also be connected in series with a variable resistor or a feed back-to-power supply synchronous current transformer to adjust the feed back so as to vary the speed. By means of thyristor, such as TG, or SCR, or other mechanical-electric switch, said device may have a chopper type of output speed variation. Further, by means of the feedback comparison of the aforesaid speed sensing means, it may generate a preset linear or non-linear speed output. Another feature of said device is that a D.C. having a plus polarity to the generated power is applied as input so as to elevate thestarting frequency response and to obtain an output speed higher than that of the input shaft. By means of a mechanical or electromagnetic brake means to lock the input shaft, it may operate as a motor function, or by means of applying a reverse polarity D.C. power supply, its output speed of the output shaft may be lowered. The coupling torque of said coupling device may also be obtained by controlling the current in the armature winding, of which the characteristics is shown in Fig. 62.

The aforesaid rotor may have an A.C. winding with the same number of poles as those of the field as shown in Fig. 63, and its feedback may be adjusted by adding a series resistor or by a synchronous current transformer which can feed back to the power supply so as to control the speed of the coupling output shaft as shown in Fig. 64; or it may obtain an approximate synchronous rotation output speed by means of a short-circuit method that generates a squirrel cage rotor function; or an input current is applied so as to obtain a synchronous drive same as that of synchronous motor.

If the prime mover of this design is an engine, said engine will be caused to run at its best performance. If this device is mounted in series with the output shaft of an engine, it may be used as an output speed regulator. Further, the coupling torque of this device may be controlled by means of the current amount and polarity being applied to the field excitation.

11) A high frequency response brake method with flexible transmission means:

It is used for a lleviating the peak inertia value during starting and braking so as to provide a higher frequency response braking function. It mainly comprises: (shown in Fig. 65).

(65-1)   Driving motor.

(65-2)   The transmission system.

(65-3)   The flexible transmission means, which may be a well-known flexible transmission structure, such as mechanical flexibility, or fluid compression flexibility, etc.

(65-4)   The output shaft of the flexible transmission means.

(65-5)   The brake means, which may be a hydraulic, pneumatic, or electro-magnetic driving means to couple to the output end of the flexible transmission means mentioned in (65-3) above.

(65-6)   The driving gear.

(65-7)   The rack gear coupled to the working table.

(65-8)   The working table.

The functions and the features of said device are as follows:

(a) Starting function: The driving function is started with the drive motor (65-1) thru the transmission means (65-2) and the flexible transmission means (65-3); at that moment, said flexible transmission means (65-3) will apply gradual accelerative torque to its load so as to have a moderate starting.

(b) The function of high frequency response brake: When wanting to stop the system during its running, cut off the power supply of motor (65-1) and simultaneously drive the brake means (65-5); now, in the total inertia force received by the brake means (65-5) at that instant, the portion received by the rotor of motor and the transmission means will have a little delay because of the flexible effect; thus, the peak inertia force of the system received by the brake means at that instant will be alleviated; and the brake means will slide so as to have shorter braking time as shown in Fig. 66.

12) A digital type of sampling and accumulative method as shown in Fig. 67, of which the main components comprise:

(a) A/D converter: It will convert the counter-EMF voltage of the tachogenerator or the armature into digital signal, and deliver it to CPU.

(b) Value setting means: It is used for generating

0255736

- 54 -

a value setting signal, and it may be a digital switch, numeral push-button, photocell, or magnetic data card or tape, or potential type signal, which is then delivered to CPU.

(c) Time sequence circuit: It will provide a reference of operation cycle for said CPU.

(d) CPU: Upon the sampling cycle coming, it will accumulate the instant values being delivered to A/D compared with the setting value, when the two comparing values are equal or first time exceeding, a corresponding output signal will be generated to control the driving motor.

13) A cup-shaped rotor stepper motor with low inertia and high frequency response is shown in Fig. 68; Fig. 69 shows a front view of the cup-shaped magnetic conductor that is to be used in the combined tunnel type or dragon-gate (or planner type) processing system or other mechanical device, and the general industrial servo-drive means. It comprises a conventional stepper motor stator, a cup-shaped rotor (68-2), and the related mechanical parts; the feature of said cup-shaped rotor (68-2) is that it comprises two or more than sets of cup-shaped rotors having a selected size and number of teeth aroung its outer circumference, and an output shaft to form a rotor assembly, in which the angle relation between the salient teeth is determined by the corresponding structure of of the stator. Said cup-shaped rotor assembly is to be excited with a permanent magnet (68-7) that is attached to the output shaft thru a bearing, and between said permanent magnet (68-7) and then said cup-shaped rotor assembly, a switable play is furnished; therefore, when said cup-shaped rotor assembly is driven by the stator to have the output shaft rotating, said permanent magnet (68-7) will only be imposed upon by the friction damping mechanical force so as to lower the mechanical inertia of the rotor assembly and to obtain higher frequency response. Fig. 70 thru 73 shown the other embodiments of this design, in which the rotor may be developed in a flat shape or into a conic shape, but the operation and functions are the same as those shown in Fig. 68 to 69.

In this design, the printing type stepper motor is a motor having high frequency response, and its feature different from that of the conventional stepper motor is shown in Fig. 74, which, in addition to the mechanical assemblies such as the axle (74-1), bearing (74-5) and case (74-3) in a conventional stepper motor, is provided with a printing type flat rotor (74-8), of which one side is furnished with a switchable number of poles of permanent magnet (74-6), and the other side is furnished with a flat iron-core magnetic circuit. On the insulating board (75-1) of said flat printing rotor (74-8), some eddy-current-shaped conductor (75-2) as shown in Fig. 75 are attached and arranged; the feature of arranging said eddy-current-shaped conductor (75-2) is the said conductors are attach on both sides of said insulating board (75-1), and they may be in eddy-shape or other selected geometric shape with a selected number of poles and conduction ring; the phase difference between the magnetic poles of said two sides is at angle of $90^{\circ}$ so as to receive the external drive for conventioanl step drive function. It opeartion is shown in Fig. 76 tc 77. Fig. 78 shows an embodiment of said motor being furnsihed with pulse signal generating winding, which may cut the field of permanent field to generate a corresponding A.C. signal, or may form an induction function together with the external sensing winding. Fig. 79 shows an embodiment of the laminae of said motor being furnished with photocell encoder sensing holes (79-3).

The feature of said printing type motor with encoder function is that the outer rim of the disc-shaped rotor is furnished with one or more than one hole (79-3) being specifically arranged for photocell signal passing thru and analysis, and said hole (79-3) (or holes) is coupled to the corresponding photocell sensing means; when the rotor of said printing type motor rotates, an encoder function may be generated simultaneously. The number, the way of arrangement, and the number of rows may be determined in accordance with the actual requirement as shown in Fig. 80. Said encoder function may also be obtained thru a load induction type of sensing means or other known method.

14) A dual-end driving working table or other mechanical structure: The object of this design is to minimize the phenomena of bending and deformation of the guide screw (81-5), and the flexure and deformation in conventional machine system. The feature of its structure is that two driving motors (81-1) are installed at the both ends of the driving guide screw (81-5) of working table (81-3) to drive the working table (81-3) simultaneously. The thrust applied to the driving nut (81-4) of working table (81-3) is from the both ends of the guide screw instead from a signal end as that of the conventional transmission method: therefore, when a similar load being applied, the guide screw of this design will only be loaded will only be loaded with one-half torque as that of the conventional signal end driving method. Consequently, the bending and deformation and the mechanical flexure and deformation will be minimized as shown in Fig. 81.

Another embodiment of this design is to use a single motor and specific transmission means to drive the both ends of the guide screw simultaneously for driving the working table so as to obtain the aforesaid function.

15) A driving gear assembly having low vibration ratio by means of phase difference: It is used for minimizing a vibration phenomenon generated by the combined tunnel type or dragon-gate type of processing system, and the general big tool machine during their working tables being driven as a result of backlash or the distortion of involute of the transmission elements. Fig. 82 shows the embodiment of said gear assembly (82-4), (82-6), in which two or more than two sets of co-axial gear assemblies are engaged with the rack (82-5), (82-7) in a given phase difference as shown in Fig. 83. When driving the working table (82-8), a synthetic pulse drive with a lower vibration ratio may be obtained as shown in Fig. 84.

Summing up the aforesaid descriptions, it may be seen that this invention is to have many novel means combined together to form a multi-function mechanical processing system that may be designed and manufactured on a basis of standard specifications and simplicity. Particularly, a series of new designs, such as, the energy-saving working table, the ATC system of th common tool chest, and the common-use dragon-gate main mechanism assembled with functional elements will use a minimum number of assemblies to provide a multi-functions, such as lathing, drilling, planing milling, grinding and boring. This invention has eliminated the drawbacks and broken thru the limits of the known universal machines that have low efficiency and single use nature. Moreover, the mechanical processing system design in this invention may be handled with the standard management method by means of management soft-more. Since the operator of htis invention may participate the design work, it will make less or no difficulty in operation because of a particular individual case, and this is another feature of this invention.

The Features of the Invention may comprise

(1). A tunnel type or dragon gate type of processing system assembled with selected elements and its related interface means, and which comprising the mechanical elements, the related transmission, driving, positioning, controlling means, and the interface means; and the main elements including:

1), one or more than one set of dragon gate structure including the conventional dragon gate structure, or a dragon gate structure being furnished with lateral girder· and tool post, at both sides, or a ring-shaped dragon gate structure with rotary lateral girder inside, or the combination of some of the aforesaid structure;

2), one or more than one set of the conventional lateral girders being fitted to the dragon gate mentioned in 1) above, or a rotary drive lateral girder for mounting tool post or tool mandrel means and other automatic tool exchanging means, or small type of tool chest;

3), two sets or more than two sets of longitudiual divided-section type or shrapnel type, or rotary disk type or ring type or ring-shaped shrapnel type working tables, or continuously circulating type working table group, or a working table group having table exchanging station, or the combination of some of the aforesaid types;

4), the automatic tool exchanging means including two or more than two common tool chests having tool exchanging and output position, and a tool exchanging means with tool turret as element, and a movable tool chest with automatic tool exchanging means;

5), the driving interface for the tool mandrel, the working table, and the tool chest including not only the well-known electric motor or fluid pressure means, but also including the new driving interface such as an axial displacement D.C. motor, a self-generating power for self-excitation and transmission, a pursuit stepper servo-motor, and a high frequency response brake means with flexible transmission means;

6), the various precision, positioning and the processing circulation control system, which is a digital type of sampling and accumulative method;

7), the mechanical type transmission interface, which including the dual-end driving type of working table, and the driving gear assembly having low vibration ratio by means of phase difference;

(2). A processing system wherein the two sides are provided with lateral girder and tool post, the guide rail for said lateral girder moving up and down, the lateral girder driving means and its related mechanical and electric structures; and the both lateral girders being provided with tools, of which the cutting edges are oposite so as to adapt the working table moving back and forth to cut a working peice from both directions.

(3). A dragon gate type of mechanical structure, ─────────────── wherein a structure having one or more set of rotary lateral girder has been provided on the gate top or on the both vertical columns, and one or more sets of ring-shaped supporting means; and said rotary lateral girder and outer supporting and sliding surface may be a partial circle or a fulcrum structure, and said sliding surface may use a bearing, air film or oil film as a sliding medium so as to minimize friction and a known mechanical or hydraulic lock means may be provided so as to lock up the rotary lateral girder of necessary; and said rotary lateral girder may be provided with a symmetrical and synchronous balance tool post or a such balance block for balancing said rotary lateral girder, when being used for lathe cutting the tool post may be caused an un-balance effect; and said synchronous and symmetrical balance block or tool post may be locked in position manually, or by means of a transmission means such as guide screw, pneumatic or hydraulic means to make reverse drive for obtaining balance always, and the same balance method may also be applied to the balance tool post; and said rotary lateral girder may be driven with an external driving motor or with a motor for the girder itself; and the power supply for the girder motor, the tool post laterally feeding motor, and the mandrel motor may be introduced in with a disk or the slip ring and its corresponding brushes; and on said structure, one or more sets of auxiliary arm may be provided, and one end of said arm is connected to said lateral girder at a given angle, while the other end is coupled to the guide rail for strengthening the structure and maintaining precision; and on said auxiliary arm, an individual or simultaneously operating tool post may be furnished and operated manually or by means of the well-known method such as a guide screw.

(4). A device ——————————————— wherein the main lateral girder may be provided with one or more sets of sub-lateral girder.

(5). A working table set ——————————————— wherein two or more than two sets of working tables in equal or un-equal height, equal or un-equal length, equal or un-equal width are furnished on one base, and are installed on a common rail or on separate rails in series and divided-section manner, or in series and interlocked manner for driving; and another feature is that each table has a separate driving means or all of them being driven with one driving means but with individual transmission means, or one or more than one set of tables used for hauling purpose to be provided with driving means; and by means of an interlock means between tables to drive the rest tables; and in case of a working piece being rather big, the working tables may suitably be dispersed to carry the working piece with its heavy points, but said tables should be driven synchronously, or by selecting several sets of coupling means or using the working piece as a locking means to drive the tables, or by putting a working piece across two tables and providing another one set or more than one set of working tables having tools at the bottom of the working piece so as to work on it during stop or in motion state.

(6). A working table set wherein an overlapping type of working table comprises one set of primary working table and one or more than one

0255736

- 65 -

set of secondary working tables; and said primary working table is installed on the table base, while the secondary working table that is driven separately or manually and may be locked up is installed on the top of the primary working table for processing small working piece; and when processing a large working piece, said secondary working table may be driven to a suitable position and locked thereto for supporting the gravity point of a large working piece or for processing to the bottom of said working piece; and said primary and secondary working tables and the working piece thereon may be driven simultaneously.

(7). A shrapnel type working table set ──────────────── wherein one or more than one set of small working tables are provided underneath a main working table, being driven to the same direction as that of said main working table, said small working tables may have the same length as that of the main working table or may not, said main or small working table may have a separate driving means, or said small working table may pass thru underneath the main working table; and said working table sets may be designed into a rotatably driven type, under which one or more than one set of small working tables in radial arrangement in to be driven in radial and axial direction.

(8). A working table set wherein a multi-set, parallel and linearly reciprocating drive type of working table set which may be provided with a separate driving element, or with a common driving element; and a mechanical interlock means or being locked with the working piece is furnished to said working table, and the interlock means or the locking method may be adopted depending upon the shape of a working piece, which is good for using differential position locking or opposite position locking method; either of said locking methods may be used for synchronous moving, or asynchronous but in same direction driving, and each of said working tables may be furnished with tool so as to perform processing work to the working piece on the adjacent working table.

(9). Two or more than two sets of rotary working tables ———————————— wherein the base is attached to the lathe bed and may be driven along the lathe bed guide rail as a rotary working table, and also may be separated in longitudinal direction as a divided section working table.

6   (10). A rotary working table ━━━━━━━━━━ ━━━━ wherein one or more than one layer is in co-axial ring-shaped structure; and on the surface of each said layer, a driving motor may be provided for same direction or opposite direction, for synchronous or asynchronous, for single or joint driving so as to perform processing work to the working piece on the adjacent tables; and it may also be designed on assembly basis to have one or more than one section with one or more than one layer or it may be combined and mixed with the circle type rotary working table.

(11). A working table set ━━━━━━━━━━ ━━━━━━━━━━ wherein said working tables may be designed and arranged in multi-row, and multi-section series, or into many groups of said arrangement, and having equal or un-equal length, width, height, and having the same level surface or a slanting angle or arc as each other in any suitable geometric shapes; the said working table may be driven separately or in synchronous coupling manner; and some of them may not be provided with driving means, but being a fixed type; and they may comprise a multi-set of rotary working tables with selected diameter, height, and related mechanical positions, or the ring-shaped working table; and they may be a mixed working table group comprising the types of working tables described in         (5) thru (10).

(12). A working table set or group  as used in ———

combination  with the various kinds of dragon gate and lateral girder structures ———————————— and they may be partially  or completely,    installed at the outer side of the dragon gate, if necessary, or may if necessary be placed in the space at the lower portion of the dragon gate, or try to reserve some space for the working piece; a further feature is that on the said working tables, tool and tool driving motor may be installed, and a conveying means may also be installed so as to render processing to a working piece on the adjacent working table, or the dragon structure may not be furnished, but use said working table set or group to perform processing work mutually, i.e., a multi-row and a series of divided section type ————————————— and the features of structure and operation are:

1), the said working tables may be equal or un-equal in size, in height, or in geometric shape;

2), the said working tables may use a common driving

0255736

- 69 -

motor thru manual , electro-magnetic, or fluid driving clutch and coupling means, or each said tables has a separate driving motor, or other driving elements for separate driving or coupled driving; and each working table may be provided with a linear or rotary type of displacement sensing means for feedback monitoring function of synchronous drive working table; and some of said working table may be made into a movable or fixed type without driving means;

3), the said working tables may carry a working piece with several gravity points, such as using one or more sets in multi-row or in series divided section type with synchromous driving; and between said working tables, a mechanical locking means may be used, or they may be locked together by means of a working piece for interlocking effect, and if a given portion of working tables have driving elements, the rest of the working tables may be actuated by means of mechanical interbcking or working piece lock-

ing method.

(13). A common tool chest structure having two or more than two sets of tool exchanging positions comprises a given sets of tool, tool post, tool post base, the positioning and driving means, two or more than two sets of tool exchanging arms and its related mechanical parts, and the positioning electric control means; and one tool chest may be used for supporting the mandrels of two or more than two sets of similar machines or different machines; and another feature of it is that every tool exchanging positions being provided with a stand-by exchanging position, of which the position should facilitate the exchanging arm and the mandrel to exchange tool; and the tool displacement structure between the stand-by position and the tool chest may be driven from tool post base to the stand-by exchanging position by the auxiliary exchanging arm or the tool post; particularly, when said spare tool being moved to the stand-by position and before being exchanged with tool of mandrel, the tool chest base driving means may be continuously driven to the other tool output stand-by position.

(14). A tool turret element type of tool exchanging means, which comprises two or more than two sets of tool turrets, tool turret seat, the tool turret seat fixing base and its positioning and driving means, and the tool exchanging arm; said tool turret not only has the conventional tool turret functions of angular rotation and locking up, but also has the features of positioning coupling lock between the tool turret and the mandrel

0255736

- 71 -

driving structure, and of exchanging the tool turret

thru an exchanging arm after being un-clamped; and in said tool turret exchanging group, the exchanging operation between the mandrel and the mandrel, and between the mandrel and the tool turret and tool chest is done by means of the exchanging arm, and the biggest feature of said means is that the currently in use in a sequence processing may be mounted on one turret to simplify the tool exchanging operation, which is similar in nature to the micro-program in the computer software portion.

(15). A tool chest motion type of automatic tool exchanging system (ATC) which comprises:

1), the base seat structure may be a fixed lathe bed or a driven working table base installed on the lathe bed; on said base seat, a fixed seat for the spindle tool turret and the tool chest is provided;

2), the spindle tool turret structure comprises one or more than one set of equal angle or un-equal angle arranged tool chuck means, and it may be driven with a motor or a fluid pressure means to rotate clockwise or counter-clockwise, or to stop at a given position;

3), one or more than one set of tool chest structure to be driven by a servo-means, which may be installed on the lathe bed, and is capable of receiving instructions, of making quantitative and reciprocating displacement driving; on which, a tool selecting or tool positioningly storing means able to rotate clockwise or counter-clockwise; and the features of said system are:

a), supposing the tool chest A has $A_1$-$A_n$ stand-by tool post;

b), tool $K_1$--$K_{n+1}$;

C), supposing the tool post B has $B_1$--$B_2$ tool spindles;

d), "C" stand for tool chest fixing seat;

e), "D" stands for base;

Their operation sequence is shown with a table below:

```
┌─────────────────────────────┐
│  K₁  Ready Tool Change      │
│        Instruction          │
├─────────────────────────────┤
│  A forwarding to B          │───┐
├─────────────────────────────┤   │
│  K₁  inserts B₁ and         │   │
│  B₁  stop                   │   │
├─────────────────────────────┤   │
│  A₁  releases and B₁        │   │
│        clamping             │   │
├─────────────────────────────┤   │
│  A returns to original      │   │
│        position             │   │
├─────────────────────────────┤   │
│  K₁  tool change            │   │
│        instruction          │   │
├─────────────────────────────┤   │
│  B releases and rotary 180° │   │
├─────────────────────────────┤   │
│  B clamping                 │   │
├─────────────────────────────┤   │
│  A forwarding to B          │   │
├─────────────────────────────┤   │
│  Ko inserts A₁              │   │
├─────────────────────────────┤   │
│  B₁  releases and A₁        │   │
│        clamping             │   │
├─────────────────────────────┤   │
│  A returns to original      │   │
│        position             │   │
├─────────────────────────────┤   │
│  Kn ready tool change       │   │
│        instruction          │   │
├─────────────────────────────┤   │
│  An returns to original     │   │
│        position             │───┘
└─────────────────────────────┘
```

$K_1$ Ready Tool Change Instruction

A forwarding to B

$K_1$ inserts $B_1$ and $B_1$ stop

$A_1$ releases and $B_1$ clamping

A returns to original position

$K_1$ tool change instruction

B releases and rotary $180^{\circ}$

B clamping

A forwarding to B

Ko inserts $A_1$

$B_1$ releases and $A_1$ clamping

A returns to original position

Kn ready tool change instruction

An returns to original position

Another feature of this system is that, in addition to said tool chest exchanging tools with the tool spindle, it may exchange tools with the adjacent tool chest by means of its displacement or the automatic tool exchange arm.

(16). A tool chest system which is formed by converting the rotary type tool chest into a multi-output position "ATC" system, of which the main feature is that it has two or more than two sets of exchanging arms so as to have the selected tool in the tool chest being exchanged with the outer tool spindle or other tool chest for the purpose of establishing an economic tool chest system.

(17). A mandrel or working table driving motor structure, in which the field iron core is thicker than that of the armature, and the field windings are an axial overlapped multi-windings, of which each may be provided with exciting control; motor bearing in an axial bearing which has the features of axial displacement and rotation; and the length of both ends of said motor shaft is suitably designed, the variation of exciting current applied to the axial overlapped field windings will cause the armature making a corresponding axial displacement, which will generate the following functions:

1), reciprocating motion during rotation, such as for boring or processing the rivet head;

2), to have the gear mounted on said shaft generating a displacement so as to change the corresponding engaged gears to vary the output speed ratio; further, it may make a micro or intermittent drive with a D.C. motor so as to prevent the gears from being collided each with other;

3), to obtain dutch or brake function by means of the axial thrust to push a friction piece;

4), to generate an axial vibration effect by means of controlling the current applied to the field winding and exciting winding for removing the small metal wastes and reducing the cutting resistance.

(18). An A.C. stepper driving motor structure, which comprises;

1), a field having a selected number of poles, and having one or more than one set of excitation windings;

2), a rotor having a selected number of poles, and having one or more than one set of windings connected to the slip ring of the rotor;

3), the related mechanical structure and brushes;

4), the polarity switching means, which may be an electro-mechanical means, a solid state electronic switch element such as Triac, or SCR and so on;

and the stator winding and rotor winding of said A.C. stepper driving motor may be connected in series or parallel, and the number of poles between the stator and the rotor may be the same or may not; and the polarity switching means may sequentially change the opposite polarities of the rotor and stator; and the operation course of said A.C. stepper driving motor is to have the field becoming an un-balance state by means of switching the polarity switch for changing polarity so as to cause the rotor to rotate to a balanced point.

(19). An A.C. stepper driving motor wherein a rotary field type of structure may be included.

(20). A magnetic coupled driving device with self-exciting, self-generated power and transmission functions of which the input shaft of said device is coupled to the mechanical shaft of a D.C. or A.C. motor, or other rotation means, or an engine, windmill, or watermill; and the output shaft of said device is used for driving the working table or other shaft, or wheel-shaped load; and said device comprises:

1), one or more than one set of shaft or wheel means for rotary driving input or output; and one end of said device is provided with permanent magnet or external D.C. excited field, which has one or more than one set of slip rings and brush set; and said brush set is separately provided with the brush holder set and the related parts, which are used for the input of the exciting current of field, and for the input or output of current of the following armature winding; and the other end or the both ends of said device are furnished with terminal cases, axles, and bearings so as to mount an armature winding rotor that may either generate power or may be driven with electricity; and on said rotor, a commutation brush set is furnished to couple the commutator segment set of said armature;

2), one or more than one set of armature winding rotor, which may be a tooth-shaped iron core armature and printing type or cup-shaped rotor, or a rotor without slot but with a lap-winding, a wave winding or frog leg winding; and it may be connected with the field winding in shunt excitation, series excitation, or compound excitation; and the commutator segments of said rotor are coupled to the said field structure; and the shaft of said rotor is opposite to the input or output end of said rotor is that its output shaft end is furnished with separate induction D.C. or A.C. speed sensing generator, or photocell, electro-magnetic type of angular displacement sensing means so as to obtain a direct proportional signal to the output speed; and the fixed end and the rotary end of said means may respectively be installed on the input end and the output end so as to obtain a direct proportional signal to the rotation difference by means of a slip ring and a brush set.

(21). A device ——————————————— wherein the coupling and speed output function may generate a coupling torque by means of the generator effect, or an input power to generate a driving torque or use a mixture of said both to attain the goal; and its output control method said device is as follows:

When being coupled by means of generated power for self-excitation, a switch means may be connected between itself and the slip disc input brush terminals or the slip ring connected to the commutation segment brushes of the armature for coupling or decoupling control; and it may also be connected in series with a variable resistor or a feedback-to-power supply synchronous current transformer to adjust the feedback so as to vary the speed;

or by means of connecting in series an active control element such as a power transistor to perform analog quantity control for varying its speed or for carrier wave modulation; or by using a thyristor such as TG or SCR, or other mechanical-electric switch, said device may have a chopper type of output speed variation; by means of the feedback comparision of the speed sensing means ————————————————it may generate a preset linear or non-linear speed output; and another feature of said device is that a D.C. having a plus polarity to the generated power is applied as input so as to elevate the starting frequency response and to obtain an output speed higher than that of the input shaft; or by means of a mechanical or electro-magnetic brake means to lock the input shaft, it may operate as a motor function, or by means of applying a reverse polarity D.C. power supply, its output speed of the output shaft may be lowered.

(22). A rotor ——————————————————— wherein the rotor may have an A.C. winding with the same number of poles as those of the field and its feedback may be adjusted by adding a series resistor or by a synchronous current transformer which can feed back to the power supply so as to control the speed of the coupling output shaft; or it may obtain an approximate synchronous rotation output speed by means of a short-circuit method that generates a squirrel-cage rotor function; or an input current is applied so as to obtain a synchronous drive similar to that of a synchronous motor.

(23). A device ——————————— wherein prime mover of this design is an engine, said engine will be caused to run at its best performance; and if this device is mounted in series with the output shaft of an engine, it may be used as an output speed regulator.

(24). A device ——————————— wherein the coupling torque of this device may be controlled by means of the current amount and polarity applied to the field excitation.

(25). A high frequency response brake method with flexible transmission means, which is used for alleviating the peak inertia during starting and braking so as to provide a higher frequency response braking function; and it mainly comprises:

1), driving motor;

2), the transmission system;

3), the flexible transmission means, which may be a well-known flexible transmission structure, such as mechanical flexibility, or fluid compression flexibility;

4), the output shaft of the flexible transmission means;

5), the brake means, which may be a manual hydraulic, pneumatic, or electro-magnetic driving means to couple to the output end of the flexible transmission means mentioned in 3) above;

6), the driving gear;

7), the rack gear coupled to the working table;

8), the working table;

(26). A digital type of sampling and accumulative method, of which the main components comprise:

a), A/D converter, which will convert the counter EMF voltage of the tachogenerator or the armature into digital signal, and deliver it to CPU;

b), value setting means, which is used for generating a value setting signal, and it may be a digital switch, numeral push-button, photocell, or magnetic data card or tape, or potential type signal, which is then delivered to CPU;

c), time sequence circuit which will provide a reference of operation cycle for said CPU;

d), CPU, which when the sampling cycle coming, will

0255736

- 82 -

accumulate the instant values being delivered to A/D converter, and have them being compared with the setting value; and when the two comparing values are equal or first time exceeding, a corresponding output signal will be generated to control the driving motor.

(27). A cup-shaped rotor stepper motor with low inertia, which comprises a conventional stepper motor stator a cup-shaped rotor, and the related mechanical parts; the feature of said cup-shaped rotor is that is comprises two or more than two sets of cup-shaped rotors having a selected size and a number of teeth around its outer circumference, and an output shaft to form a rotor assembly, in which the angle relation between the salient teeth is determined by the corresponding structure of the stator; and said cup-shaped rotor assembly is to be excited with a permanent magnet that is attached to the output shaft thru a bearing, and between said permanent magnet and the said cup-shaped rotor assembly, a suitable play is furnished so as to lower the mechanical inertia of the rotor assembly and the rotor may be designed into a flat shape or into a conic shape.

(28). A printing type stepper motor, which includes a printing type flat rotor, of which one side is furnished

0255736

- 83 -

with a suitable number of poles of permanent magnet, and the other side is furnished with a flat iron-core magnetic circuit; and on the insulating board of said flat printing rotor, some conductors are furnished; and the feature of arranging said eddy-shaped conductor is that said conductors are attach on both sides of said insulating board, and they may be in eddy-shape or other selected geometric shape with a selected number of poles and slip ring; and the phase difference between the magnetic poles of said two sides is at an angle of 90° so as to receive the external drive for step drive function; and said flat rotor having eddy-shaped conductor may be a laminated structure; and the distribution shape of its related conductors and its magnetic pole distribution may be determined as the case may require.

(29). A printing type stepper motor ————————— ————————— wherein, the rotor is provided with a third winding for signal feedback; and when the motor is running, said third winding will cut the field of a permanent magnet for sensing the angular displacement, or by using two said third windings with a phase difference of 90° as a phase identification means, or to form a conventional "Inductosyn" with an external sensing winding.

(30). A printing type stepper motor ————————————————————

wherein another feature is that it has a flat-plate-shaped rotor with an encoder function; and on said rotor, one or more light passing holes being in a selected geometric shape, position, and arrangement so as to be coupled to an external coupling sensing means to generate an angular displacement analysis or by means of a light passing hole set having $90^{\circ}$ of phase difference for phase identification function.

(31). A flat-plate-shaped rotor with encoder function which may be adapted to the printing type stepper motor with stepper setting function, or the known stepper motor, or the flat-plate-shaped helical eddy-current disc.

(32). A dual-end driving working table or other mechanical structure, of which the object is to minimize the phenomena of bending and deformation of the guide screw, and the flexure and deformation in conventional machine system; and the feature of its structure is that two driving motors are installed at both ends of the driving guide screw of working table to drive the working table simultaneously; and the thrust applied to the driving nut installed at the base of working table and coupled to the guide screw will form both ends of the guide screw; therefore, when a similar load is applied, the guide screw of this design will only be loaded with one-half torque as that of the conventional single end driving method; and another embodiment of this design is to use a single motor and specific transmission means to drive    both ends of the guide screw simultaneously for driving the working table so as to obtain the aforesaid function.

(33). A driving gear assembly having low vibration ratio by means of phase difference, which is used for minimizing a vibration phenomenon generated by the combined tunnel type or dragon gate type of processing system, and the general big tool machine during their working tables being driven as a result of backlash or the distortion of involute of the transmission elements; and said gear assembly has two or more than two sets of co-axial gear assemblies are engaged with the rack in a given phase difference; and when driving the working table, a synthetic pulse drive with a lower vibration ratio may be obtained.

- 86 -

0255736

This application is a divisional application from 83305856.3 which claimed upon filing:

1.    A dragon-gate machine tool ————————————————

————————including one or more rotary lateral girder members, for tool location, movable over or pivotable on a surface, locking means for fastening the or each girder member in a preselected position and optionally weight means for balancing the or each girder member.

2.    A composite work surface for use in tooling comprising a plurality of surfaces, each of the same or different dimensions, reciprocatable and/or rotatable on rail means by the same or different driving means and mutually disposed in a preselected linear and vertical arrangement.

3.    A tool    storage holder for use in a multi-function tooling system comprising a servo-drivable body for accommodating a plurality of tools and which is movable into and out of a tool exchanging position for automatically exchanging a tool that is not needed with a tool that is needed, including a plurality of tool exchanging arms.

4.    A DC or AC motor for use in a multi-function machine tool system, wherein the field iron core is of greater thickness than the armature and the field windings are axially overlapped.

5. A magnetic driving device with self-exciting, self-generated power and transmission functions of which the input shaft of said device is coupled to a mechanical shaft and the output shaft of said device is for driving, comprising one or more sets of shaft or wheel means for rotary driving input or output, one end of the device being provided with permanent magnet or external D.C. excited field, which has one or more than one set of slip rings and brush set for the input of the exciting current of field, and for the input or output of current of the following armature winding, the other end of both ends of said device being provided with means for terminal cases, mounting an armature winding rotor that may either generate power or may be driven, a commutation brush set being furnished on the rotor to couple the commutator segment set of said armature, one or more armature winding rotors connected with the field winding and the commutator segments of said rotor being coupled to the said field structure wherein the shaft of said rotor is opposite to the input or output end of said rotor is that its output shaft end is furnished with separate induction D.C. or A.C. speed sensing generator, or angular displacement sensing means so as to obtain a directly proportional signal to the output speed; and the fixed end and the rotary end of said means a respectively be installed on the input end and the output end so as to obtain a directly proportional signal to the rotation difference by means of a slip ring and a brush set.

6.    A high frequency response brake method with flexible transmission means, for alleviating peak inertia during starting and braking so as to provide a higher frequency response braking function, comprising  a driving motor, a transmission system, a flexible transmission means such as mechanical flexibility, or fluid compression flexibility, an output shaft of the flexible transmission means, to couple to the output end of the flexible transmission means, a driving gear, a rack gear coupled to the working table, and a work surface.

7.    A digital type of sampling and accumulating system, comprising, an A/D. converter, for converting the counter EMF voltage of a tachogenerator or an armature into digital signal, and delivery to a Central Processing Unit , value setting means  for generating a value setting signal for delivery to the CPU, a time sequence circuit for providing a reference of operation cycle for said CPU, wherein CPU is for accumulating the instant values being delivered to A/D converter, and comparing them with a setting value such that when the two compared values are equal or the setting value is exceeded, a corresponding output signal will be generated to control the driving

- 89 -

0255736

motor.

8. A low inertia stepper motor comprising a stepper motor stator, two or more sets of cup-shaped rotors having a plurality of teeth of a preselected size around the outer circumference, and an output shaft to form a rotor assembly, in which the angle between the teeth depends on the corresponding structure of the stator where the cup-shaped rotor assembly can be excited with a permanent magnet attached to the output shaft through a bearing.

9. A printing type stepper motor, which includes a printing type flat rotor, of which one side is furnished with a plurality of poles of a permanent magnet, and the other side is furnished with a flat iron-core magnetic circuit, wherein conductors are attached on both sides of the insulating board on the flat printing rotor and the phase difference between the magnetic poles of said two sides is at an angle of $90^{\circ}$ so as to receive the external drive for step drive function.

10. A dual-end driving member having a driving guide screw with two driving motors installed at the both ends of the drive simultaneously or a single motor and transmission means to drive the both ends of the guide screw simultaneously.

11. A driving gear assembly having low vibration ratio by means of phase difference, for minimizing a vibration

0255736

phenomenon generated by a multi-function machine tool system comprising two or more sets of co-axial gear assemblies engagable with a work surface rack in a given phase difference.

12.  A multi-function machine  tool system including one or more of the following: one or more dragon gate structures optionally having tool location means and/or automatic tool exchanging means, two or more work surfaces, an axial displacement D.C. motor, a self-generating power for self-excitation and transmission, a pursuit stepper servo-motor,      high frequency response brake means with flexible transmission means, a digital precision, positioning and      processing circulation control system, and a dual-end driving type of working table, and driving gear assembly having low vibration ratio by means of phase difference.

The tool exchange apparatus of this invention may be used in conjunction with the tool exchange apparatus shown in Figures 43 to 46, which is the subject of copending divisional application number 86107373.2.

## CLAIMS

1.    An automatic tool exchange apparatus for use in a multi-function machine tool system, comprising at least one first tool carrier (A; 48-4) having means for carrying a plurality of tools ($K_0$ - $K_5$; 48-8), at least one second tool carrier (B; 48-6), and means for moving said first carrier so as to cooperate with said second carrier for supply and/or removal of a tool to 1 from the second carrier.

2.    Apparatus according to Claim 1, wherein the first tool carrier is a tool chest (A; 48-4), comprising a plurality of tool-carrier arms ($A_1$ - $A_4$; 48-5) and the chest is selectively axially displaceable and/or rotatable about an axis perpendicular to said arms to present a selected tool to the second tool carrier.

3.    Apparatus according to Claim 2, wherein the second tool carrier (B) comprises a single arm having means on at least one free end for carrying a tool and rotatable about an axis perpendicular to said arm, or a member having a plurality of tool carrier arms (48-6) each having on its free end means for carrying a tool, and being rotatable about an axis perpendicular to said arms.

4.    Apparatus according to Claim 3, wherein the second tool carrier is rotatable between a tool reception position and another position, and the first tool carrier is movable axially to and from the second tool carrier.

5.    Apparatus according to Claim 4, wherein the other position is a machining position.

6.  Apparatus according to Claim 3, 4 or 5, comprising an array of first tool carriers ($A_1$-$A_9$), external ones thereof each being cooperable with at least one single tool carrier arm ($B_1$-$B_9$) and adjacent first tool carriers being cooperable with one another for transferring of machine tools from a selected one carrier to a selected other.

7.  Apparatus according to Claim 6, comprising at least two sets of tool carrier arms.

8.  Apparatus according to Claim 1, 2, 3 or 4, wherein the first tool carrier is drivingly controlled by a direct-type servo means.

9.  An automatic tool exchange apparatus for use in a multi-function machine tool system, substantially as herein described on page 22, line 7 to page 23, line 11, page 44, line 3 to page 45, line 19, and page 71, line 11 to page 74, line 12, with reference to Figures 47-51 of the drawings.

FIG.1

FIG. 2

FIG.3

FIG.4

FIG.5

FIG. 6

FIG. 7

FIG. 8

FIG.9

10-1

10-2

10-2

10-2

FIG.10

FIG.11

FIG.12

FIG. 13

0255736

FIG. 14

FIG. 15

15-1

15-1

15-1

15-2
15-3
15-3
15-5
15-4

15-2
15-3
15-3
15-5
15-4

15-6
15-6
15-6

15-7

13/65

0255736

FIG.16

16-12  16-11  16-10  16-1  16-7  16-8  16-2  16-9  16-8  16-3  16-4  16-2  16-3  16-4  16-8  16-1  16-7  16-8  16-3  16-4  16-2  16-3  16-4  16-3  16-5  16-5  16-6

14/65

0255736

FIG.17

FIG. 18

0255736

0255736

FIG.19

FIG. 20

FIG. 21

FIG. 22

FIG. 23

FIG. 24

FIG. 25

0255736

FIG. 26

FIG. 27

FIG. 28

FIG. 29

FIG. 30

FIG. 31

FIG. 32

FIG. 33

0255736

FIG. 33

0255736

FIG.34

0255736

FIG. 35

FIG. 36

FIG. 38

```
                    ┌──────────────┐      ┌──────────────┐
                    │ Control unit │──────│ Instruction  │
                    │              │      │    input     │
                    └──────┬───────┘      └──────────────┘
                           │
        ┌──────────┬───────┼───────┬──────────┐
        │          │       │       │          │
   ┌────────┐ ┌────────┐ ┌────────┐ ┌────────┐ ┌────────┐
   │ Motor  │ │ Motor  │ │ Motor  │ │ Motor  │ │ Motor  │
   │Control │ │Control │ │Control │ │Control │ │Control │
   └──┬──┬──┘ └──┬──┬──┘ └──┬──┬──┘ └──┬──┬──┘ └──┬──┬──┘
```

| Position Detector 1 | M₁ | Position Detector 2 | M₂ | Position Detector 3 | M₃ | Position Detector 4 | M₄ | Position Detector 5 | M₅ |

FIG. 37

Conveyer Belt A Drives Motor "CW".

Working Table Being Guided To Conveyer Belt A.

Conveyer Belt A Drives Motor A To Stop.

Exchanging Station of Working Tables To Position.

Exchanging Station of Working Tables Stop For Positioning

Conveyer Belt Drives Motor "CCW".

Conveyer Belt Motor Stop.

FIG. 39

FIG. 40

FIG.41

FIG. 42

FIG.43

Tool chest Being Drives To output point A.

Machine Stops Upon The Mandrel A Completing one processing Work.

The Exchanging Arm At Output point A Completing Tool Exchanging.

Mandrel A Being Continuously Driven.

Tool chest Being Driven To output B.

Machine Stops Upon Mandrel B Completing One Processing work.

The Exchanging Arm At Output point B Completing Tool Exchanging.

Mandrel B Being Continuously Driven.

Machine Stops Upon Mandrel A or B Completing one processing Work.

Tool chest Has The Tool Being Driven To Stand-by position For Next processing.

FIG.44

FIG.45

45-12
45-8
45-1
45-7
45-11
45-2
45-9
45-13
45-10
45-14
45-6
45-3
45-4
45-5

36/65

0255736

0255736

Tool Turret/Chest Positioning.

Exchanging Instructions.

Mandrel Returns To Position.

Exchanging Arm positioning And Locking Tool Turret.

Tool Turret/Chest And Mandrel Releases The Tool Turret.

Exchanging Arm Extends Forwards And Exchanges.

Exchanging Arm Moves Backwards And Inserts The Tool Turret Into Mandrel And Tool Turret/Chest.

Tool Turret/Chest And Mandrel Being Locked.

Exchanging Arm Being Released.

Exchanging Arm Returns to Original position.

FIG.46

FIG.47

FIG.48

0255736

```
┌─────────────────────────────────────────┐
│ K₁ Ready Tool Exchanging Instruction     │
└─────────────────────────────────────────┘
              │
┌─────────────────────────────────────────┐
│ A Moving To B                            │◄──┐
└─────────────────────────────────────────┘   │
              │                                │
┌─────────────────────────────────────────┐   │
│ K₁ Inserts Into B₁ And B₁ Stops.         │   │
└─────────────────────────────────────────┘   │
              │                                │
┌─────────────────────────────────────────┐   │
│ A₁ Unclamping And B₁ Clamping.           │   │
└─────────────────────────────────────────┘   │
              │                                │
┌─────────────────────────────────────────┐   │
│ A Returns.                               │   │
└─────────────────────────────────────────┘   │
              │                                │
┌─────────────────────────────────────────┐   │
│ K₁ Tool Exchanging Instruction.          │   │
└─────────────────────────────────────────┘   │
              │                                │
┌─────────────────────────────────────────┐   │
│ B₁ Unclamping And Rotates 180°.          │   │
└─────────────────────────────────────────┘   │
              │                                │
┌─────────────────────────────────────────┐   │
│ B Clamping.                              │   │
└─────────────────────────────────────────┘   │
              │                                │
┌─────────────────────────────────────────┐   │
│ A Moving To B.                           │   │
└─────────────────────────────────────────┘   │
              │                                │
┌─────────────────────────────────────────┐   │
│ K₀ Inserts Into A₁                       │   │
└─────────────────────────────────────────┘   │
              │                                │
┌─────────────────────────────────────────┐   │
│ B₁ Unclamping And A₁ Clamping.           │   │
└─────────────────────────────────────────┘   │
              │                                │
┌─────────────────────────────────────────┐   │
│ A Returns.                               │   │
└─────────────────────────────────────────┘   │
              │                                │
┌─────────────────────────────────────────┐   │
│ Kₙ Ready Tool Exchanging Instruction     │   │
└─────────────────────────────────────────┘   │
              │                                │
┌─────────────────────────────────────────┐   │
│ Aₙ Returns.                              │───┘
└─────────────────────────────────────────┘
```

FIG. 49

FIG. 50

0255736

Tool Changing Instruction : Tool At Processing Point B4 Being Conveyed To B1.

B4 Rotating 180°

A1 Moving To Y+ Until To Position Point. A1 Tool Spindel Clamping Tool And B1 Tool Spindel Unclamping Tool.

A1 Return To Zero Point And Rotates 180°.

A1 Moving To Y⁻ Until To Positioning Point. A4 Tool Spindel Clamping Tool And A4 Tool Spindel Unclamping Tool.

A4 Moving To Y⁻ Until To Position Point. A7 Tool Spindel Clamping Tool And A4 Tool Spindel Unclamping Tool.

A4 Return To Zero Point.

A7 Rotates 90° Counter-clockwise.

A7 Moving To Y⁻ Until To Positioning Point.

B1 Tool Spindel Clamping Tool And A7 Tool Spindel Unclamping Tool.

A7 Returns To Zero Point.

B1 Rotates 180°.

End System. Stand-By.

FIG. 51

FIG.52

FIG.53

A-A

45/65

0255736

AC Source Input

FIG.54

46/65

0255736

| CW | SD / ST | 0° | 60° | 120° | 180° | 240° | 300° | 0° | 60° | 120° |
|---|---|---|---|---|---|---|---|---|---|---|
| | $Q_1$ | ON | | | ON | | | ON | | |
| | $Q_2$ | | ON | | | ON | | | ON | |
| | $Q_3$ | | | ON | | | ON | | | ON |
| | $Q_4$ | | | | ON | ON | ON | | | |
| | $Q_5$ | ON | ON | ON | | | | ON | ON | ON |
| | $Q_6$ | ON | ON | ON | | | | ON | ON | ON |
| | $Q_7$ | | | | ON | ON | ON | | | |
| CCW | SD / ST | 0° | 60° | 120° | 180° | 240° | 300° | 0° | 60° | 120° |
| | $Q_1$ | ON | | | ON | | | ON | | |
| | $Q_2$ | | ON | | | ON | | | ON | |
| | $Q_3$ | | | ON | | | ON | | | ON |
| | $Q_4$ | ON | ON | ON | | | | ON | ON | ON |
| | $Q_5$ | | | | ON | ON | ON | | | |
| | $Q_6$ | | | | ON | ON | ON | | | |
| | $Q_7$ | ON | ON | ON | | | | ON | ON | ON |

SD: Step Degree.
ST: Step Time.

FIG.55

Phase 2

Phase 1

Phase 1

Phase 2

56-3

56-4

56-1

56-2

56-5    56-6    56-5

FIG.56

FIG.57

| Step | CW Rotation | | CCW Rotation | |
|------|-----|-----|-----|-----|
|      | SW₁ | SW₂ | SW₁ | SW₂ |
| 1 | a | a | a | a |
| 2 | b | a | a | b |
| 3 | b | b | b | b |
| 4 | a | b | b | a |

FIG.58

**FIG.59**

**FIG.60**

0255736

FIG. 61

FIG. 62

FIG.63

FIG. 64

FIG. 65

FIG.66

FIG.67

0255736

FIG.68

FIG.69

FIG. 70

FIG. 71

72-7

72-2

N    72-6        S    72-3

72-4        72-1

72-5

N            S

72-8        72-8

FIG. 72

73-8        73-7        73-8

N    73-6        S    73-2

73-4        73-3

73-5        73-1

N            S

FIG. 73

60/65    0255736

FIG. 74

FIG. 75

FIG. 76

| | WA | WB |
|---|----|----|
| 1 | + | 0 |
| 2 | 0 | + |
| 3 | − | 0 |
| 4 | 0 | − |
| 5 | + | 0 |
| ⋮ | | |

FIG. 77

*FIG. 78*

*FIG. 79*

63/65    0255736

FIG. 80

FIG. 81

65/65    0255736

FIG. 83

83-7  83-6
83-5
83-4

FIG. 84

Table Linear speed

Gear A Linear speed

Gear B Linear speed

FIG. 82

82-8
82-1  82-2
82-3  82-5  82-7
82-4  82-6

European Patent Office

**EUROPEAN SEARCH REPORT**

0255736

Application number

## DOCUMENTS CONSIDERED TO BE RELEVANT

EP 87200856.0

| Category | Citation of document with indication, where appropriate, of relevant passages | Relevant to claim | CLASSIFICATION OF THE APPLICATION (Int. Cl.4) |
|---|---|---|---|
| A | <u>DD - A - 0 154 475</u> (SIEGLOCH, STARK)<br>* Abstract; claim 1; fig. 1-3 * | 1,2,4, 5,6,7 | B 23 P 23/02<br>B 23 Q 3/157 |
| X | <u>GB - A - 1 430 275</u> (SHIESS AG)<br>* Page 2, right column, lines 74-79; page 3, right column, lines 98-100; claim 1; fig. 1, 9-12 * | 1,2,3, 4,5 | |
| A | <u>DE - B2 - 2 102 860</u> (HEIDEL-BERGER DRUCKMASCHINEN AG)<br>* Column 1, lines 45-54; fig. 1 * | 6,7,8 | |

TECHNICAL FIELDS SEARCHED (Int. Cl.4)

B 23 P 21/00

B 23 P 23/00

B 23 Q 3/00

The present search report has been drawn up for all claims

| Place of search | Date of completion of the search | Examiner |
|---|---|---|
| VIENNA | 23-11-1987 | BISTRICH |